# EUROPEAN PATENT SPECIFICATION

(11) **EP 4 616 331 B1**
(45) Date of publication and mention of the grant of the patent: **28.10.2026**
(21) Application number: 24746447.2
(22) Date of filing: 26.06.2024
(51) Int. Cl.: G06N 3/045, G06N 3/088, G05B 23/02, G10L 19/00, G06F 18/2131, G06F 18/22, G06F 18/2433, G10L 25/51, G06N 3/0464, G06N 7/01, G06N 3/048, G06V 10/82

(54) **SYSTEMS AND METHODS FOR DETECTING ANOMALOUS MACHINE OPERATIONS USING HYPERBOLIC EMBEDDINGS**
SYSTEME UND VERFAHREN ZUR ERKENNUNG ANOMALER MASCHINENOPERATIONEN UNTER VERWENDUNG HYPERBOLISCHER EINBETTUNGEN
SYSTÈMES ET PROCÉDÉS DE DÉTECTION D'OPÉRATIONS ANORMALES DE MACHINE À L'AIDE D'INTÉGRATIONS HYPERBOLIQUES

(30) Priority: 30.08.2023 US 202318240183
(43) Date of publication of application: 17.09.2025
(73) Proprietor: Mitsubishi Electric Corporation, Tokyo 100-8310 (JP)
(72) Inventor: GERMAIN, Francois, Cambridge, Massachusetts 02139-1955 (US); WICHERN, Gordon, Cambridge, Massachusetts 02139-1955 (US); LE ROUX, Jonathan, Cambridge, Massachusetts 02139-1955 (US)
(74) Representative: Pfenning, Meinig & Partner mbB
(86) International application number: PCT/JP2024/080101
(87) International publication number: WO 2025/047989

(56) References cited:
- WO-A1-2024/122151
- FLABOREA ALESSANDRO ET AL: "Are we certain it's anomalous?", 2023 IEEE/CVF CONFERENCE ON COMPUTER VISION AND PATTERN RECOGNITION WORKSHOPS (CVPRW), IEEE, 17 June 2023 (2023-06-17), pages 2897 - 2907, XP034397702, DOI: 10.1109/CVPRW59228.2023.00291
- LOUISE NAUD ET AL: "Manifolds for Unsupervised Visual Anomaly Detection", ARXIV.ORG, CORNELL UNIVERSITY LIBRARY, 201 OLIN LIBRARY CORNELL UNIVERSITY ITHACA, NY 14853, 19 June 2020 (2020-06-19), XP081699393
- GERMAIN FRANCOIS G ET AL: "Hyperbolic Unsupervised Anomalous Sound Detection", 2023 IEEE WORKSHOP ON APPLICATIONS OF SIGNAL PROCESSING TO AUDIO AND ACOUSTICS (WASPAA), IEEE, 22 October 2023 (2023-10-22), pages 1 - 5, XP034423520, DOI: 10.1109/WASPAA58266.2023.10248092

## Description

### [Technical Field]

This disclosure generally relates to signal processing and control applications, and more specifically to detecting anomalies by analyzing signals indicative of the operation of a machine performing a task.

### [Background Art]

Diagnosis and monitoring of a machine's operating performance are beneficial for a wide variety of applications. Physical machines comprise several components working in tandem to perform tasks. During operation, the machines and/or their components operate in some predefined manner and certain observations with regards to the operation of such machines are helpful in discerning whether the machines and/or their sub-parts are operating normally or anomalously. One example of such observations is acoustic or sound signals produced by the machines during operation. For example, moving parts of some electric machines produce acoustic signals of a certain type which is distinguishable from the acoustic signals produced when there is some immediate or upcoming fault indicating anomalous operation. In some scenarios, automated diagnosis of a machine may be performed to detect anomalous signals of the operation of the machine performing a task, based on deep learning-based techniques.

While deep learning-based techniques available in the art offer better insights in the analysis of the anomaly signal, there are serious limitations to conventional approaches in this field of endeavor. To achieve the desired accuracy for anomaly detection, in all conventional solutions, the audio signal is usually transformed into high-dimensional embeddings residing in a so-called high-dimension space though it remains much smaller in dimension than the dimension of the audio measurements themselves. Such a space is high-dimensional because the number of dimensions is still too high for humans to manipulate with any ease. The appropriate number of dimensions needed for optimal performance must balance competing constraints: it needs to be high enough to correctly capture the diversity of anomalous behaviors but needs to be small enough to keep the computational burden of the method under control and avoid capturing superfluous spurious patterns that are not actually indicative of anomalous behavior. A major drawback of existing anomalous detection systems based on audio/video representation of an operation of a machine is the complexity and richness of the features to be analyzed for the practical accuracy of anomaly detection. In these available solutions, such a high-dimensional embedding may exceed the computational time and memory requirements on systems, such as embedded systems, with limited computational power embodied in various factory automation settings.

Accordingly, there is a need to overcome the above-mentioned problems associated with detecting anomalous operation of machines through signal processing. More specifically, there is a need to develop methods and systems that are feasible and efficient for detecting signal snippets indicative of anomalous operation of the machine.

Flaborea, Alessandro et. al.: "Are we certain it's anomalous?", 2003 IEEE/CVF Conference on Computer Vision and Pattern Recognition Workshops, 17 June 2023, proposes the novel use of Hyperbolic uncertainty for Anomaly Detection (HypAD).

Naud, Louise et. al.: "Manifolds for Unsupervised Visual Anomaly Detection", ARXIV.org, 19 June 2020, presents state-of-the-art results on visual anomaly benchmarks in precision manufacturing and inspection.

### [Summary of Invention]

Various embodiments of the present disclosure disclose systems and methods for detecting anomalous operation of a machine performing a task. Additionally, it is the object of some embodiments to perform anomalous sound detection using deep learning techniques. The scope of protection of the present invention is set out by the appended claims.

It is also an object of some embodiments to provide unsupervised anomalous sound detection by learning a model that can detect anomalies when only data in normal operating conditions is available for training the model parameters. A typical application is condition monitoring and diagnosis of machine sounds in applications such as predictive maintenance and factory automation.

Automated diagnosis of machines may be used to detect anomalous signals using training data that corresponds to normal operating conditions of the machine. The anomaly detection based on such training data is an unsupervised approach. For example, unsupervised anomalous sound detection may be suitable for detecting specific types of anomalies, such as abrupt transient disturbances or impulsive sounds that may be detected based on abrupt temporal changes. Furthermore, these approaches can capture much more complex anomalous patterns in the data, patterns that might be too subtle or too complicated for human operators to detect, describe and/or diagnose.

Some example embodiments are based on the realization that in order to achieve the desired accuracy for anomaly detection, one approach may be to transform the audio signal into high-dimensional embeddings residing in a so-called high-dimension space. Although such a space still remains much smaller in dimension than the dimension of the audio measurements themselves, it is characterized as high dimension because the number of dimensions is still too high for humans to manipulate with any ease. It is also a realization of some example embodiments that the suitable number of dimensions needed for optimal performance must balance competing constraints: it needs to be high enough to correctly capture the diversity of anomalous behaviors but needs to be small enough to keep the computational burden of the method under control and avoid capturing superfluous spurious patterns that are not actually indicative of anomalous behavior. For example, an embedding network embeds the features extracted from a signal including one or a combination of an audio signal and a video signal into the space having 128 dimensions to capture the diversity of anomalies well and reach satisfactory performance. However, some example embodiments are based on the realization that such a high-dimensional embedding may exceed the computational time and memory requirements on systems, such as embedded systems, with limited computational power embodied in various factory automation settings.

It is a realization of some example embodiments that unsupervised anomalous detection remains a complex and challenging task. Some example embodiments realize that among these challenges, one major drawback of existing anomalous sound detection algorithms is that they fail when presented with domain shift. For example, in the context of sound detection, acoustic characteristics may change between the normal data collected for training and normal data collected at inference time due to factors such as different background noise, different operating voltages, etc. This failure is typically caused by algorithms that are unable to distinguish between anomalous signal changes caused by an anomalous sound and normal signal changes caused by domain shift. It is also a realization of some example embodiments that one possible solution to building effective methods resilient to these task complexities is to increase the dimensionality of the vector quantities manipulated inside the algorithm to detect anomalies. However, such an increase may cause additional computational time and memory requirements on systems, such as embedded systems, with limited computational power embodied in various factory automation settings. Additionally, with increase in dimensionality, the risk of capturing spurious behaviors rather than representative behaviors also increases. Accordingly, some example embodiments are directed towards providing alternate measures for processing feature embeddings that incurs less resources, can therefore be implemented on smaller and embedded devices, and also minimizes spurious behaviors in anomaly detection tasks.

Some example embodiments are based on the realization that hyperbolic spaces demonstrate the ability to encode hierarchical relationships much more effectively than Euclidean space when using those embeddings for classification. A corollary of that property is that the distance of a given embedding from the hyperbolic space origin encodes a notion of classification certainty, naturally mapping inlier class samples to the space edges and outliers near the origin. As such, some example embodiments are based on the realization that the hyperbolic embeddings generated by a deep neural network pre-trained to classify short-time Fourier transform frames computed from normal machine sound are more distinctive than Euclidean embeddings when attempting to identify unseen anomalous data.

Some example embodiments are based on recognizing an improvement due to the hyperbolic space in the context of anomaly detection of the operation of machines. This new additional property gives the hyperbolic spaces an advantage over Euclidean spaces that has not been recognized before. Specifically, to carry information sufficient to detect anomalies with practical reliability, the encodings of a signal into hyperbolic space need to have fewer dimensions than the encodings of the same signal into Euclidean space. For example, in the context of sound anomaly detection, the 128-dimensional encoding of the sound signal in the Euclidean space carries the same information as the 2-dimensional encoding of the same signal in the hyperbolic spaces.

Some embodiments discover this property empirically in the context of sound anomaly detection. Hence, it was unclear initially whether this new property is the property of the hyperbolic spaces or the property of acoustic signals. However, some additional experiments justify the conclusion that this is a property of the hyperbolic space rather than an audio signal. Hence, additionally or alternatively to anomalous sound detection using hyperbolic embeddings, some embodiments use hyperbolic embeddings of different kinds of signal indicative of the operation of the machine to detect the anomaly.

Some example embodiments are thus directed towards providing systems, methods, and programs for performing unsupervised anomaly detection using embeddings from a trained neural network architecture with a hyperbolic embedding layer, using the embeddings generated from a test sample to generate an anomaly score.

In order to achieve the aforesaid objectives and advancements, some example embodiments provide systems, methods, and computer program products for anomaly detection of a machine operating to perform a task.

Some example embodiments provide an anomaly detection system for detecting an anomaly of an operation of a machine based on a signal indicative of the operation of the machine performing a task. The system comprises at least one processor and memory having instructions stored thereon. The instructions when executed by the at least one processor, cause the anomaly detection system to collect hyperbolic embeddings of the signal indicative of the operation of the machine. The hyperbolic embeddings lie in a hyperbolic space defined by a model for n-dimensional hyperbolic geometry in which the points of the hyperbolic geometry lie in an n-dimensional open subset of the real coordinate space of dimension n. The processor is also configured to perform the detection of the anomaly of the operation of the machine based on the hyperbolic embeddings to determine an anomaly score and render the anomaly score.

In yet some other example embodiments, a computer-implemented method for detecting anomaly of an operation of a machine based on a signal indicative of the operation of the machine performing a task is provided. The method comprises collecting hyperbolic embeddings of the signal indicative of the operation of the machine. The hyperbolic embeddings lie in a hyperbolic space defined by a model for n-dimensional hyperbolic geometry in which the points of the hyperbolic geometry lie in an *n-*dimensional open subset of the real coordinate space of dimension n. The method further comprises performing the detection of the anomaly of the operation of the machine based on the hyperbolic embeddings to determine an anomaly score and rendering the anomaly score.

In yet some other example embodiments, a non-transitory computer readable medium having stored thereon computer executable instructions for performing the method for detecting anomaly of an operation of a machine is provided.

According to some example embodiments, measurements of the signal or features extracted from the measurements are processed with an embedding neural network to produce Euclidean embedding of the signal into Euclidean space. The Euclidean embedding is then projected into the hyperbolic space to produce the hyperbolic embeddings. The hyperbolic embeddings are processed by a classifying neural network to produce at least a portion of the anomaly score.

In some example embodiments, the classifying neural network is trained with training data generated from non-anomalous operations of the machine. The non-anomalous operations of the machine are defined relative to standard operating performance data of the machine. For example, the standard operating performance data of the machine may define values of one or more operational parameters of the machine. According to some example embodiments, the embedding neural network is jointly trained with the classifying neural network such that weights of the embedding and classifying neural networks are interdependent on each other.

According to some example embodiments, the anomaly score is a function of a combination of a distance between the hyperbolic embeddings and an origin of the hyperbolic space and a probability of correct classification returned by the classifying neural network. A control system operatively connected to the anomaly detection system may control the operation of the machine based on the rendered anomaly score.

The presently disclosed embodiments will be further explained with reference to the following drawings. The drawings shown are not necessarily to scale, with emphasis instead generally being placed upon illustrating the principles of the presently disclosed embodiments.

### [Brief Description of Drawings]

[Fig. 1A]

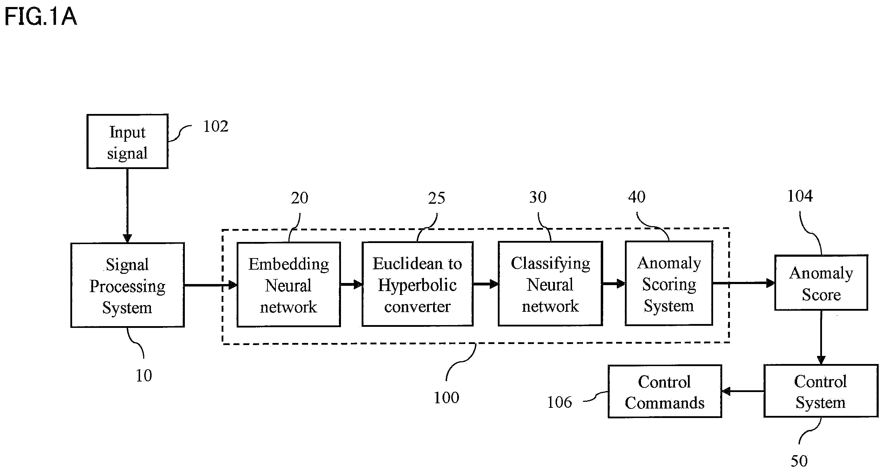

   FIG. 1A illustrates a block diagram of an anomaly detection system for a machine, according to some example embodiments;
[Fig. 1B]

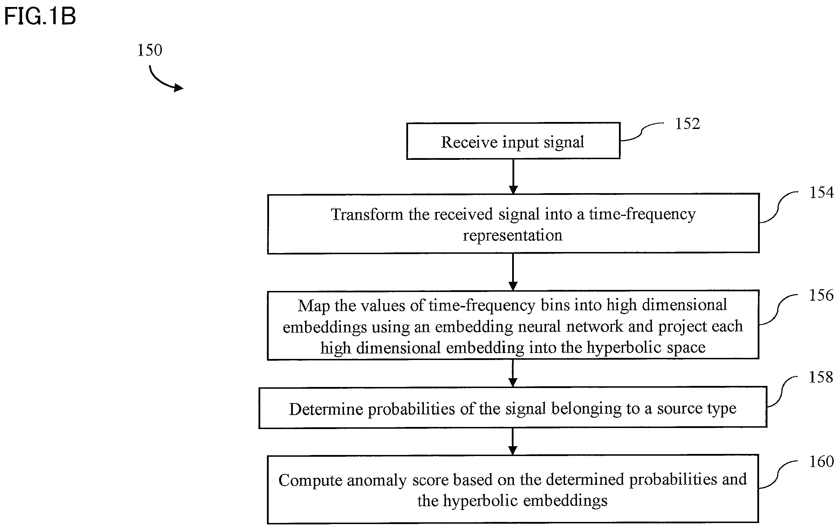

   FIG. 1B illustrates a flowchart of a method for anomaly detection of a machine, according to some example embodiments;
[Fig. 2A]

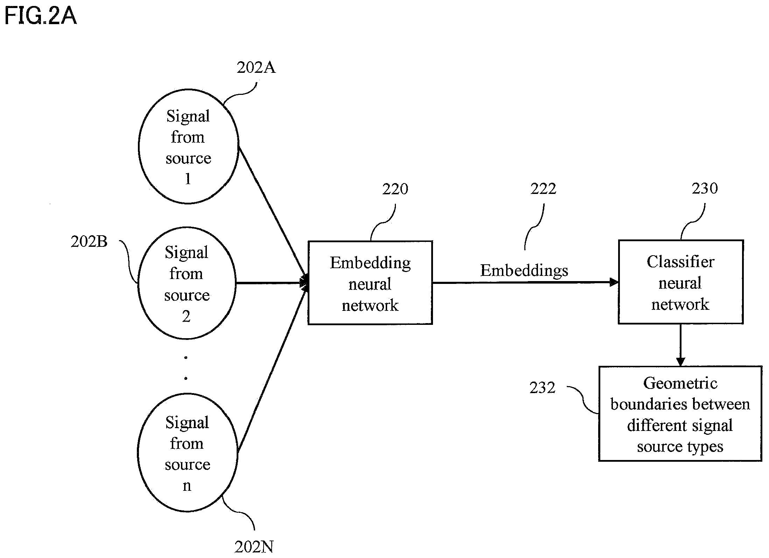

   FIG. 2A illustrates a block diagram of a training configuration of an anomaly detection system, according to some example embodiments;
[Fig. 2B]

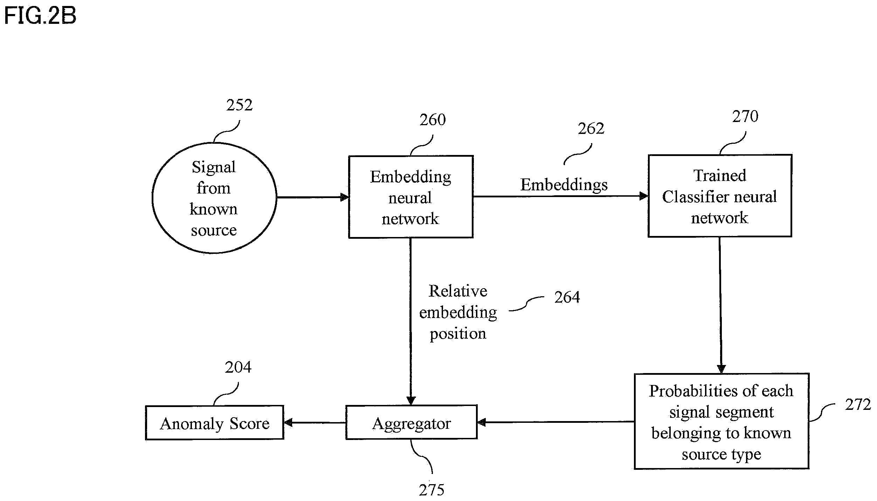

   FIG. 2B illustrates a block diagram of a run time configuration of the trained anomaly detection system, according to some example embodiments;
[Fig. 3]

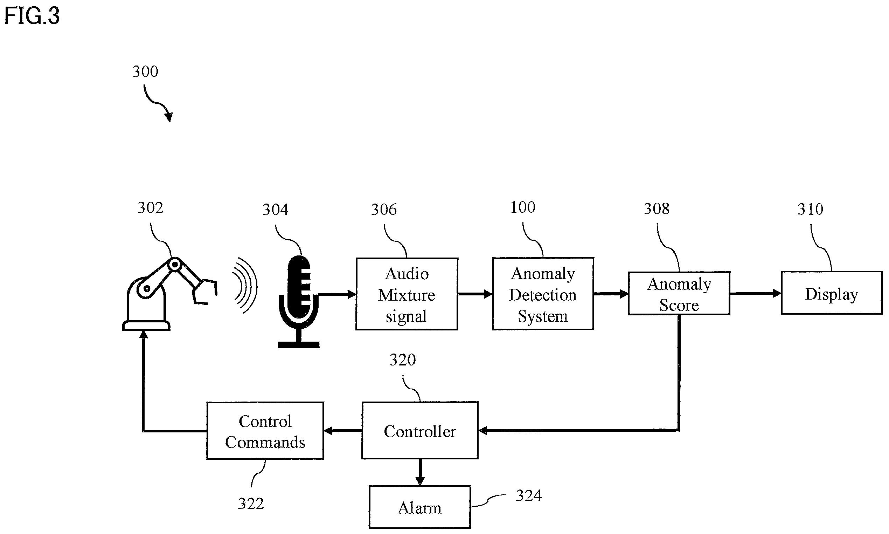

   FIG. 3 illustrates an example control application utilizing the anomaly detection system of FIG. 1A, according to some example embodiments;
[Fig. 4]

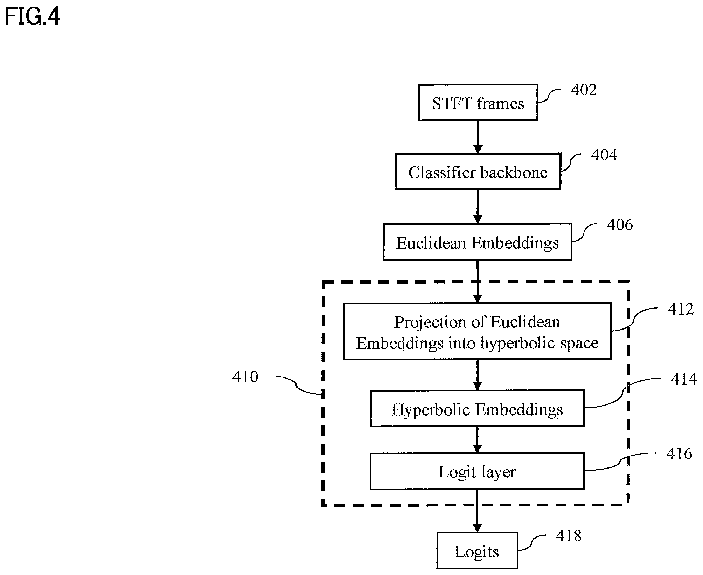

   FIG. 4 illustrates a run time configuration of the anomaly detection system of FIG. 2B operating on acoustic signals, according to some example embodiments;
[Fig. 5A]

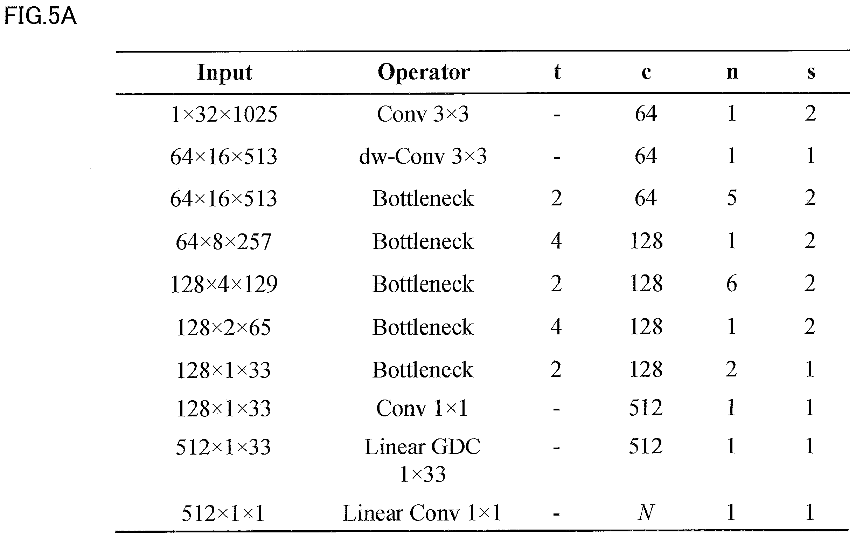

   FIG. 5A illustrates a modified architecture of classifier backbone utilized by the anomaly detection system of FIG. 4, according to some example embodiments;
[Fig. 5B]

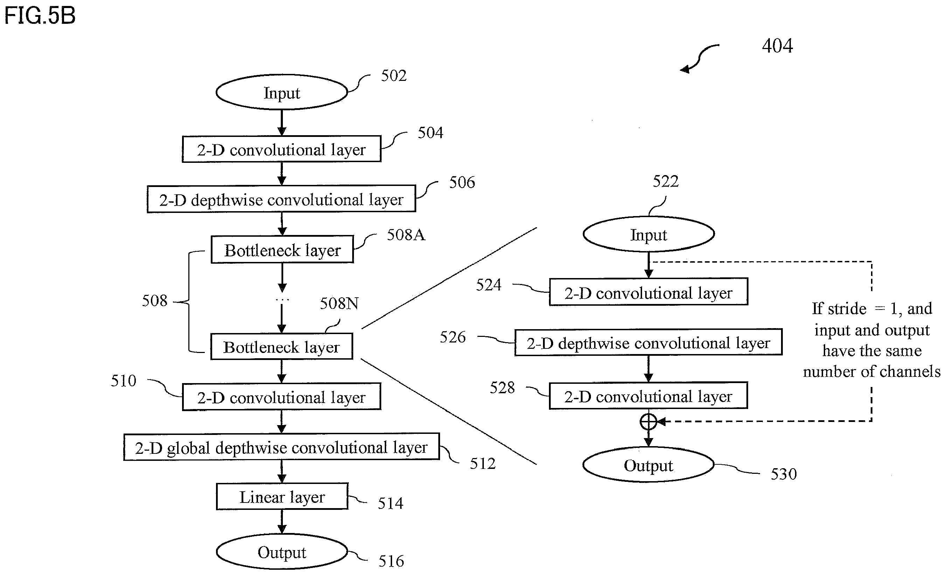

   FIG. 5B illustrates an exemplar structure of the embedding neural network utilized by the anomaly detection system of FIG. 4, according to some example embodiments;
[Fig. 5C]

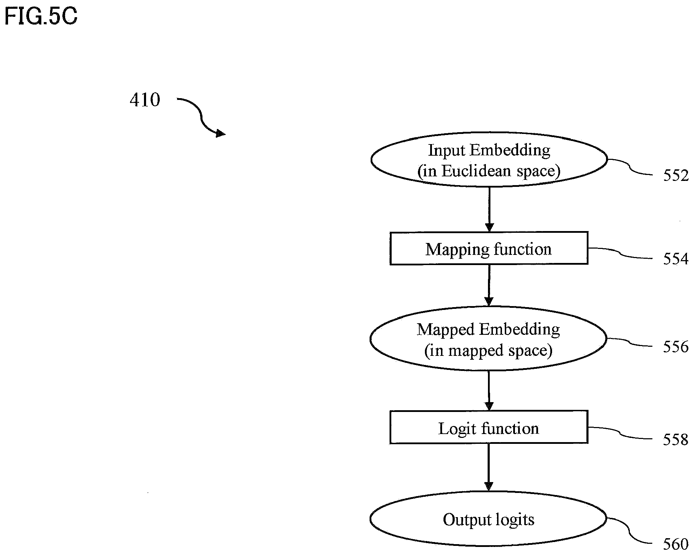

   FIG. 5C illustrates an exemplar structure of a classifying neural network utilized by the anomaly detection system of FIG. 4, according to some example embodiments;
[Fig. 6]

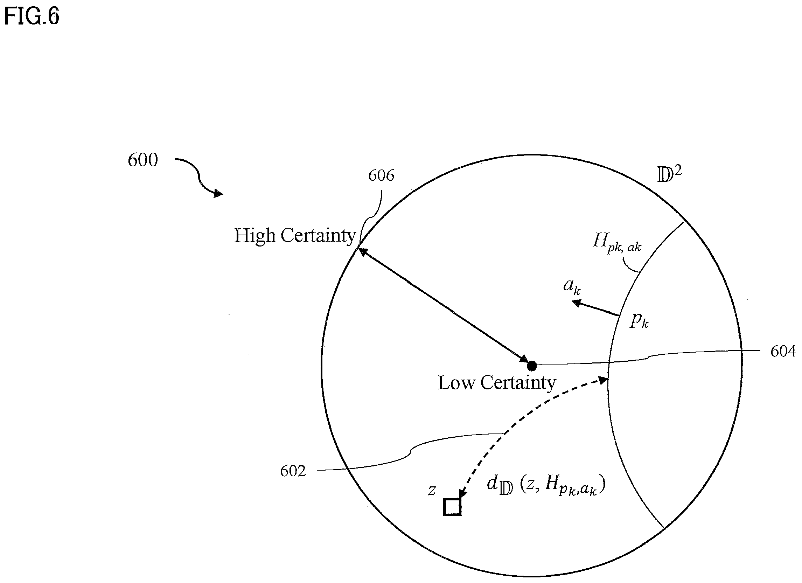

   FIG. 6 illustrates a two-dimensional Poincaré ball projection of hyperbolic space, according to some example embodiments;
[Fig. 7]

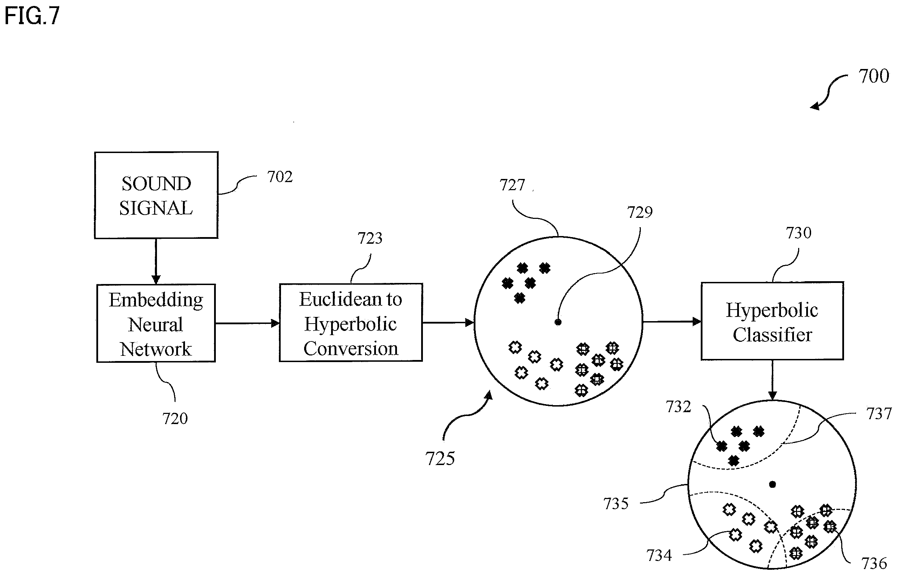

   FIG. 7 illustrates a block diagram of a training configuration of an example anomaly detection system using acoustic signals for anomaly detection, according to some example embodiments;
[Fig. 8A]

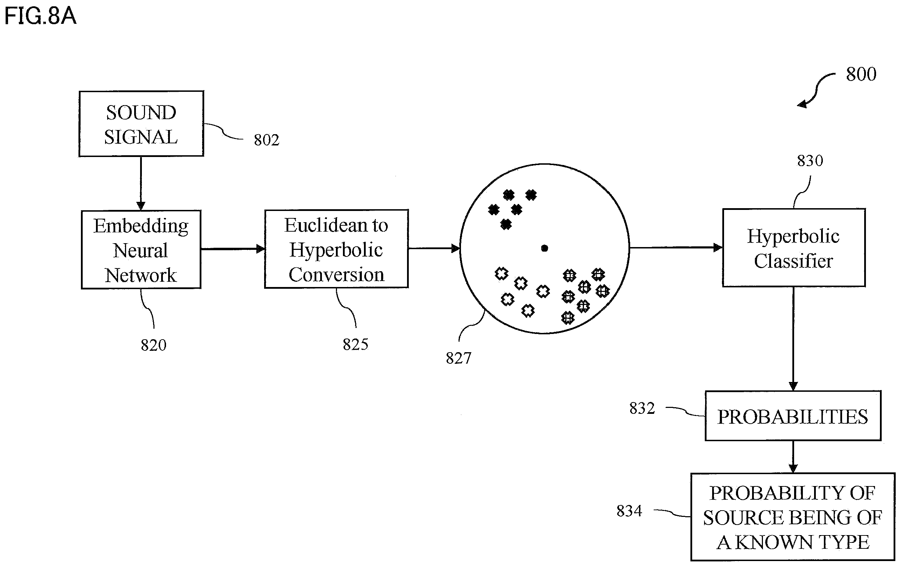

   FIG. 8A illustrates a block diagram of an example run time configuration of the trained anomaly detection system of FIG. 7, according to some example embodiments;
[Fig. 8B]

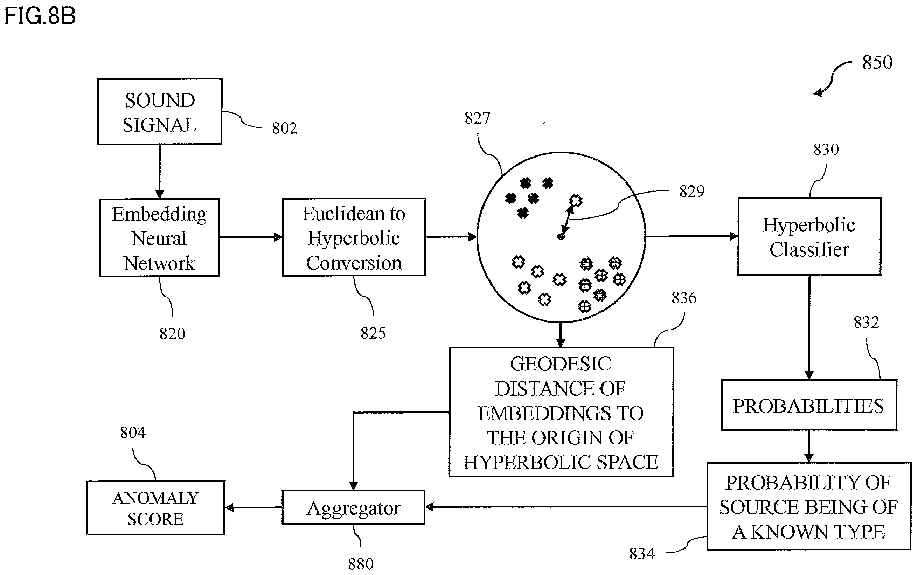

   FIG. 8B illustrates a block diagram of another example run time configuration of the trained anomaly detection system of FIG. 7, according to some example embodiments; and
[Fig. 9]

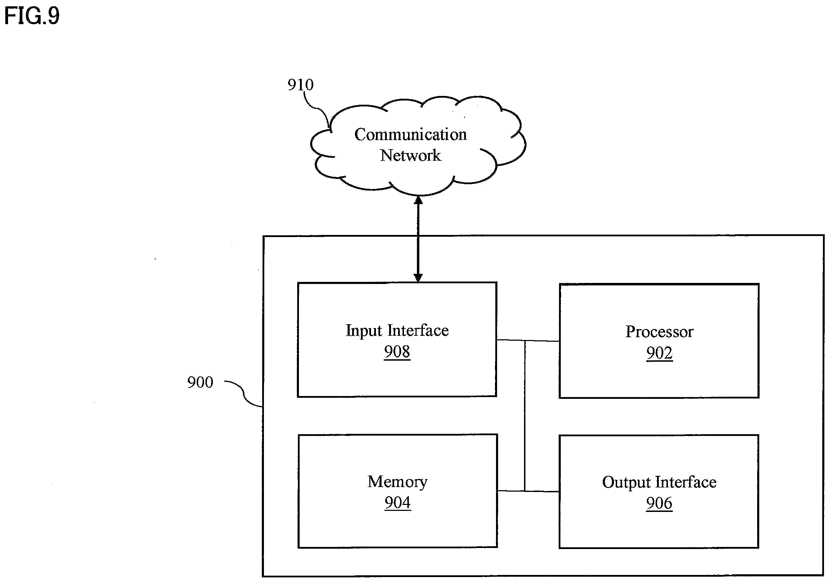

   FIG. 9 illustrates a hardware configuration of an example anomaly detection system, according to some example embodiments.

### [Description of Embodiments]

While the above-identified drawings set forth presently disclosed embodiments, other embodiments are also contemplated, as noted in the discussion. This disclosure presents illustrative embodiments by way of representation and not limitation. Numerous other modifications and embodiments can be devised by those skilled in the art insofar this falls within the scope of the invention which is solely defined by the appended claims.

The following description of the exemplary embodiments will provide those skilled in the art with an enabling description for implementing one or more exemplary embodiments. Contemplated are various changes that may be made in the function and arrangement of elements without departing from the scope of the invention as set forth in the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like-reference numbers and designations in the various drawings may indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Automatically detecting faulty equipment, i.e., anomaly detection, is an essential task in the modern industrial society. Anomaly detection in the context of a machine performing a task may be considered as the detection of some observations that provide attributes and inferences different from those when the machine performs normal operations. While it is difficult to exactly predict the fault or anomaly when it occurs, there have been several attempts at automating the task of detecting an occurred anomaly using measurements pertaining to the machine. Some signals indicative of the operation of the machine could be of various types, such as audio signals, video signals, vibration, and the like. The choice of signal in consideration for detection of anomalous operation varies based on the type of the machine, environment in which it is operated, and measurement mechanisms available for acquiring such signals. In some scenarios, anomalous sound detection is advantageous because can be adapted to a vast variety of machines and operations.

With regards to physical machines such as those that comprise moving parts, sound or acoustic signals are good indicators of anomalous operation for such machines. Also, performing anomaly detection from sound, i.e., anomalous sound detection, is appealing due to factors such as sensor cost and ability to measure signals without line of sight. However, conventionally training neural networks to predict the anomaly requires anomalous samples. This is a difficult task since anomalies do not occur when desired and are often rare. Secondly, deliberately inducing a fault in the operation of machines to cause anomalous operation is not practically feasible due to potential damage to the machines due to such faults. Furthermore, anomalies are governed by several operating parameters of the machine and as such generating a rich set of training data that caters to all types of anomalies would be a long and often an impossible task. Therefore, audio or not, practical anomaly detection design is hampered by the difficulty of collecting anomalous samples which, beyond the cost of labeling, is further affected by issues such as the rare occurrence of anomalies or the cost associated with deliberately provoking them. As such, unsupervised approaches are particularly of interest in the field.

For example, unsupervised anomalous sound detection techniques are useful when only data in normal operating conditions (i.e., non-anomalous operation of the machine) is available for training the model parameters. Typical approaches for unsupervised anomalous sound detection include those based on auto encoder-like architectures, where a model trained only on normal data to reconstruct its input should exhibit a large reconstruction error when presented with an anomalous example at inference time. Another class of approaches, referred to as surrogate task models, uses an alternative supervised training task to learn a model of normality, and then measure deviations from normal to predict anomalies. Example surrogate tasks include: (1) outlier exposure, where sounds that are known to be quite different from the machine of interest are used as synthetic anomalies, (2) predicting/classifying metadata (e.g., machine instance) or attributes (e.g., operating load), or (3) learning to predict what augmentations (e.g., time-stretching or pitch-shifting) are applied to an audio clip.

Predicting or classifying metadata (e.g., machine instance) or attributes (e.g., operating load) of an audio clip involves learning to correctly classify these metadata or attributes for normal machine sounds by learning a representation of these metadata or attributes through the distribution of learned embeddings (i.e., output vectors from the last hidden layer). An anomaly detector is built on top of that "normal" embedding distribution learned from solely normal machine sounds, using the relative position of an unseen sample's embedding from the "normal" embedding distribution to determine the likely condition, normal or anomalous, of that sample. For example, the distance of the embedding to its K-nearest inlier neighbors in the embedding space can be used as criterion, setting a distance threshold above which a sample is deemed anomalous.

Some example embodiments realize that hyperbolic spaces demonstrate the ability to encode hierarchical relationships much more effectively than Euclidean space when using those embeddings for classification. Some example embodiments are based on recognizing a new property of the hyperbolic space relevant to the context of anomaly detection of the operation of machines. This new additional property gives the hyperbolic spaces an advantage over Euclidean spaces that has not been recognized before. Specifically, to carry information sufficient to detect anomalies with practical reliability, the encodings of a signal into hyperbolic space need to have fewer dimensions than the encodings of the same signal into Euclidean space. For example, in the context of sound anomaly detection, the 128-dimensional encoding of the sound signal in the Euclidean space carries the same information as the 2-dimensional encoding of the same signal in the hyperbolic spaces.

Accordingly, some example embodiments attempt to train and analyze embeddings as vectors in hyperbolic space rather than the typical vectors in Euclidean space. A hyperbolic neural networks approach is practically appealing due to the fact that hyperbolic spaces can embed tree structures with arbitrary low distortion, as volume grows exponentially as a function of the distance to the space origin. Shallower tree nodes are then positioned closer to the origin, and deeper nodes farther. As such, it may more naturally accommodate hierarchical aspects of many audio tasks and datasets. Example embodiments described herein attempt to leverage such aspects, including through the use of hyperbolic neural networks. A particularly appealing aspect in the context of surrogate-task anomaly detection methods is the corollary behavior of embeddings in hyperbolic space shown in such that, as information gets organized hierarchically in space, the distance of an embedding to the origin expresses something alike some notion of certainty regarding the characteristics of the input. Some example embodiments explore the benefits of replacing the Euclidean space by a hyperbolic space for learning embeddings in a surrogate-task-based method that makes for a simple and effective detection method.

The detected anomaly is reliable to a good extent given that the anomaly is quantized as a score which in turn is aggregated based on two strong parameters indicative of the underlying anomaly - first is the probability of a signal belonging to a certain type and second is the geodesic distance of embeddings of the signal from an origin of the hyperbolic space. As such, the computed anomaly score is reliable enough to engineer control solutions for maintenance and/or some control actions in view of the detected anomaly. Accordingly, some example embodiments provide measures for controlling one or more aspects of the machine for which an anomaly is detected. These and several other advantages and improvements are substantiated through the description that follows.

FIG. 1A illustrates a block diagram of an anomaly detection system 100 for a machine, according to some example embodiments. The anomaly detection system 100 is communicatively coupled to a signal processing system 10 that processes an input signal 102. The input signal 102 corresponds to an observation regarding an operation of the machine. In this regard, the input signal 102 may be a continuous signal that is captured by one or more sensors in an environment in which the machine operates. In some example embodiments, the input signal 102 may be a mixture of different signals such as signals from different sources, signals captured by different sensors, signals of different modalities and the like. According to some example embodiments, the signal may be one or a combination of audio signals, video signals, vibration, and the like. The signal processing system 10 comprises suitable circuitry and software for processing the input signal to fragment it into segments of suitable size. In this regard, the signal processing circuitry 10 may sample a threshold portion of the input signal at regular intervals and transform the sampled portions into time-frequency representations. According to some example embodiments, the sampled portions of the input signal 102 are transformed into short-time Fourier transform (STFT) frames for further processing.

The anomaly detection system 100 comprises an embedding neural network 20 that produces a Euclidean embedding corresponding to each segment of the input signal 102. In this regard, when the input signal 102 is an acoustic signal, the neural network 20 maps the values of the time-frequency bins into high dimensional embeddings (i.e. in Euclidean space). For example, when the input signal 102 is an acoustic signal, the embedding neural network 20 generates an embedding as a vector of numbers, for each frame of sound, where a frame typically has a fixed time duration. For Euclidean embeddings in 2 dimensions, for example, the network 20 outputs two numbers for two coordinates (say x and y) in 2-D. For Euclidean embeddings with more dimensions, the network 20 outputs as many numbers as there are dimensions, for each frame. There typically isn't a straightforward intrinsic geometric property to exploit in Euclidean space. For example, the origin of the space (x = 0 and *y* = 0) has no particular meaning. It can be moved without impacting the system. Accordingly, the anomaly detection system 100 comprises a Euclidean to hyperbolic converter 25 that converts the Euclidean embeddings to hyperbolic embeddings. In this regard, the converter 25 projects each of the Euclidean embeddings into the hyperbolic space. The advantage of using hyperbolic embeddings over Euclidean embeddings stems from the fact that hyperbolic embeddings require lesser resources and time for processing since in the context of sound anomaly detection, the 128-dimensional encoding of the sound signal in the Euclidean space carries the same information as the 2-dimensional encoding of the same signal in the hyperbolic spaces.

The hyperbolic embeddings are provided to a classifying neural network 30 of the anomaly detection system 100. According to some example embodiments, the classifying neural network 30 is a linear classifier in hyperbolic space that learns to organize the embeddings in such a way that the ancillary aspects of non-anomalous operation of the machine can be identified through some geometric criterion based on their respective locations. By the nature of the hyperbolic space's geometry, "linear" boundaries (i.e., hyperplanes) are not lines but arcs in 2-D, and they are not "flat" but "bended" in higher dimensions, when considered from the perspective of a Euclidean space. According to some example embodiments, the classifying neural network 30 is a deep neural network trained to classify hyperbolic embeddings as belonging to a certain attribute type. In this regard, for each hyperbolic embedding, the classifying neural network 30 computes a probability that the corresponding segment of the input signal 102 belongs to a certain attribute type. In some example embodiments, the attribute types may be defined in relation to the machine for which anomaly detection is being performed. For example, the attribute type may indicate an identifier such as a model number of the machine, a type identifier of the machine, running speed, or running mode and the like. The goal of the classifying neural network 30 is to find geometric boundaries between the different types in hyperbolic spaces and it is trained beforehand in such a manner that it learns boundaries for which a certain attribute type of the machine is detected correctly as often as possible. The classifying neural network 30 outputs the probabilities that a particular signal segment of the input signal 102 belongs to the different known types of attributes, depending on the position of the corresponding embeddings with respect to the trained type boundaries.

The anomaly detection system 100 also comprises an anomaly scoring system 40 for quantifying the extent of anomaly detected in the input signal 102. In this regard, the anomaly scoring system 40 computes an anomaly score 104 for each segment of the input signal 102 (or each hyperbolic embedding) and outputs an anomaly score for the input signal 102 based on aggregation of the anomaly scores of the individual embeddings. The scoring of anomaly is performed based on the probabilities output by the classifying neural network 30. According to some example embodiments, those probabilities and/or some intrinsic geometric aspect of the location of an embedding in the embedding space are aggregated to generate an anomaly score 104 for each hyperbolic embedding. The higher the score, the more likely the signal segment has anomalous data. The anomaly detection system 100 outputs the anomaly score 104 as a measure of the underlying anomaly in the operation of the machine.

According to some example embodiments, the anomaly score 104 may be output for each segment of the input signal 102. The anomaly score 104 may be rendered to a display device through an output port of the anomaly detection system or to a control system 50 of the machine for further processing. The control system 50 may be internal or external to the anomaly detection system 100. The control system 50 compares the anomaly score 104 with a threshold to initiate some control actions. The threshold may be defined in relation to the operating conditions of the machine, the type of the machine, or some other suitable parameter to deem the operation of the machine as anomalous or non-anomalous. In an event where the anomaly score 104 is more than or equal to the threshold, the control system 50 may output one or more control commands 106 to control the operation of the machine. The control commands 106 may include firing an alert or alarm, changing one or more operational parameters of the machine, initiating a maintenance action for the machine, or a combination thereof.

In this way, the anomaly detection system 100 is able to detect anomaly in the operation of the machine without incurring significant resources and time for computation. Also, since the neural networks 20 and 30 are trained only with training data corresponding to normal operations of the machine, the anomaly detection system 100 is able to categorize any data that deviates from the normal operation of the machine as anomalous.

FIG. 1B illustrates a flowchart of a method 150 for anomaly detection of a machine, according to some example embodiments. The method 150 may be performed by the anomaly detection system 100 of FIG. 1A. The method comprises receiving 152 an input signal such as the input signal 102 that captures data indicative of operation of the machine performing a task. The input signal may be received via an input port or interface of the anomaly detection system 100. The received input signal is transformed 154 into a time-frequency representation in a manner described with reference to FIG. 1A. The values of the time-frequency bins are mapped 156 into high dimensional embeddings in Euclidean space using an embedding neural network and then each high dimensional embedding is projected into the hyperbolic space. According to some embodiments, all the time-frequency bins may be collectively mapped into the hig dimensional embeddings, for example as one embedding per frame. For each hyperbolic embedding, probability of a signal segment corresponding to a particular hyperbolic embedding belonging to a certain source type or attribute type is determined 158 in the manner described with reference to FIG. 1A. The anomaly score for each segment of the input signal is computed 160 based on the determined probability and optionally based on some geometric properties of the hyperbolic embedding in the hyperbolic space. The computed anomaly score may then be rendered to a display device or a controller for further processing and action.

FIG. 2A illustrates a block diagram of a training configuration of an anomaly detection system, according to some example embodiments. It is an object of the training process to provide an embedding neural network 220 such as a deep neural network that is trained to classify normal machine signal or data fed as short-time Fourier transform (STFT) frames. The hyperbolic embeddings, generated by such an embedding neural network 220, are more distinctive than Euclidean embeddings when attempting to identify unseen anomalous data for a machine. Referring to FIG. 2A, training data 202A, 202B, ... 202N from respective signal sources 1, 2, ..., N is fed to the embedding neural network 220 to generate hyperbolic embeddings 222. The sources 1, 2, .... N may correspond to different machines or to different sections of a same machine. According to some example embodiments, the training data 202A, 202B, ... 202N corresponds to normal operation data of a plurality of machines i.e. when the machines operate without any anomaly. In some example embodiments, the training data 202A, 202B, ... 202N corresponds to normal operation data of a plurality of sections or even parts of a same machine. In yet some other example embodiments, the training data 202A, 202B, ... 202N corresponds to a combination of normal operation data of a plurality of machines and normal operation data of a plurality of sections or even parts of one or more machines of the plurality of machines. In this regard, the training data 202A, 202B, ... 202N may be obtained from suitable sensors or a data repository that is compiled using such sensors that capture signals such as sound, video, vibrations, voltages, currents and the like related to a plurality of machines. For example, in some example embodiments, the signals may be one or a combination of an acoustic signal and a video signal. In some example embodiments, the signals may include measurements of vibration caused by operation of a machine. In some example embodiments, the signals may include one or a combination of a voltage and a current controlling the machine, and a torque produced by the machine.

The classifying neural network 230 is trained in an unsupervised manner to classify some ancillary aspect of the training data (e.g., type of machine, model number, running speed, running mode). The classifier neural network 230 is also trained to learn to organize the hyperbolic embeddings 222 in such a way that those ancillary aspects can be identified through some geometric criterion based on their respective locations in the hyperbolic space. As such, the classification is learned from embeddings in hyperbolic geometry. The embedding neural network 220 generates an embedding as a vector of numbers for each segment of an input training signal from the training data 202A ... 202N. The embedding is fed to the classifier neural network 230 which finds geometric boundaries 232 between the different types of the sources. These different types are defined through various attributes, each indicative of one more properties of each of the signal sources 1, 2,...N.

The geometric boundaries may allow an interpretation of hyperbolic embeddings as classification probabilities of an ancilliary aspect of training data samples associated with these embeddings to be of a specific kind (or value). Geometric boundaries may be determined by finding boundaries that minimize, as best as possible, a loss or cost function. The cost function may correspond to a cross-entropy loss between, on the one hand, the classification probabilities interpreted from the position of the embeddings with respect to the geometric boundaries and, on the other hand, the true kind (or value) of the ancillary aspect of the training data samples associated with those embeddings. Finding the geometric boundaries that minimize a loss function may be done using a stochastic gradient optimization algorithm. The stochastic gradient optimization algorithm may be an adaptive optimization algorithm. The adaptive optimization algorithm may be a Riemannian Adam optimization algorithm, i.e., an algorithm generalizing the Adam optimization algorithm to Riemannian manifolds (as in spaces) which covers hyperbolic spaces.

A variety of examples are presented in the training process, to optimize both the embedding and classifier networks such that the classifier 230 learns boundaries for which the type of signal source is detected correctly as often as possible. In some example embodiments, the output of the classifying network 230 may be checked with a validation set. According to some example embodiments, the embedding neural network is jointly trained with the classifying neural network such that weights of the embedding and classifying neural networks are interdependent on each other.

One example training process and configuration is explained with respect to unsupervised anomalous sound detection where the input signal is an acoustic signal provided as a file. Each input signal file is processed using a STFT with a 1024-sample Hann window and a 256-sample hop size, resulting in 313 frames from which the magnitudes are taken. For each epoch, the network is trained with a block of 32 consecutive STFT frames from each file, i.e., 6000 blocks of size 32×1025, selected randomly for each file. These blocks are grouped in batches of size 32. At testing, input file's magnitude STFT is broken in overlapping blocks of 32 frames with a step size of 1 frame and then the logits are gathered for each of the blocks as basis for the score of that input file.

FIG. 2B illustrates a block diagram of a run time configuration of the trained anomaly detection system of FIG. 2A, according to some example embodiments. At inference time, the goal is to identify whether the signal segments contain data different from that of normal operation of the machine. Signal 252 from a known source is fed to the trained embedding neural network 260 to output embeddings 262 in the hyperbolic space. The trained classifier neural network 270 outputs probabilities 272 of each signal segment of the signal 252 belonging to the known source type. For example, the probabilities may be expressed in decimals or percentages. In some example embodiments, the relative position 264 of each hyperbolic embedding with respect to the origin of the hyperbolic space is obtained from the embedding neural network 260 and an aggregator 275 aggreagates the relative embedding position 264 and the corresponding probability 272 to compute an anomaly score 204. Some example embodiments are based on recognizing that embedding into the hyperbolic space can be done together with classifying to take advantage of separate or joined training.

FIG. 3 illustrates an example control application utilizing the anomaly detection system of FIG. 1A, according to some example embodiments. The neural networks of the anomaly detection system 100 may be considered to be trained in the manner described with reference to FIG. 2A. Furthermore, FIG. 3 is described in the context of acoustic signals, that is it is assumed that the input signal to the anomaly detection system 100 is an audio signal, however, it may be contemplated that the control example of FIG. 3 may be executed with other suitable types of the input signal as well. A machine 302 may perform a task such as object manipulation or rotations and as such due to the operation of machine, several sounds may be produced by the machine during operation. A transducer such as a microphone 304 captures the audio signals produced by the machine during operation and submits the captured signals 306 to the anomaly detection system 100. In some example embodiments, the audio signal 306 may be a mixture of sounds produced by several sources in the environment of the machine 302. The anomaly detection system 100 performs the anomaly detection method of FIG. 1B and 2B to output an anomaly score 308 for each of the audio signals. The anomaly score 308 may be provided to a controller 320 of the machine 302 to perform fault analysis based on the computed anomaly score 308. For example, the controller 320 may check the anomaly score 308 of each signal with a threshold and if the anomaly score is greater than or equal to the threshold, the controller 320 may generate one or more control commands 322 aimed at rectifying the underlying fault with the machine 302. For example, in this regard the controller 320 may change a mode of the operation of the machine 302. In some example embodiments, additionally or optionally, the controller 320 may generate one or more alarms 324 based on the outcome of the fault analysis. Additionally, or optionally, in some example embodiments, the anomaly score 308 may be rendered to a display device 310.

Several operational and structural aspects of the anomaly detection system will now be described considering the input signal to be an acoustic signal. However, it may be contemplated that the description of such aspects is non-limiting and can be extended to other types of input signals without deviating from the scope of this disclosure.

### Unsupervised anomalous sound detection system

An example run-time configuration of the anomaly detection system of FIG. 1A and FIG. 2B operating on acoustic signals is illustrated in FIG. 4. STFT frames 402 of the acoustic signal are provided to the classifier backbone 404 which is a deep neural network that outputs embeddings 406 which are vectors of dimension N in Euclidean space. The Euclidean embeddings 286 are then passed through a fully-connected (FC) classifier block 410 to output class logits 418. The classifier block 410 leverages the hyperbolic space, mapping/projecting 412 first the Euclidean embeddings 406 onto a Poincaré ball with the corresponding exponential map to generate the hyperbolic embeddings 414, and then using the hyperbolic multinomial regression layer 416 to determine the class or type logits 418 as the anomaly score.

As baselines, a system is trained using a regular multinomial regression classifier block ("Euclidean"), i.e., we have an identity mapping and the logit layer which functions as the anomaly scoring system 40 of FIG. 1A is simply a fully-connected layer with *n* output channels corresponding to the *n* machines or n sections per machine. Also a system is trained using an ArcFace classifier block ("Arcface"). For this one also, there is an identity mapping. Additionally, the logit layer differs between training and testing in order to incentivize the apparition of the desired margins in the (Euclidean) embedding space at training. For all systems, for the purpose of experimental evaluation, the training is performed for a low-dimension embedding space, for example., N=2, and a high-dimension embedding space, for example , N=128 for acoustic signals. In practice, the training may be only performed for one specific dimension.

### Embedding Neural Network and Classifying Neural Network for processing acoustic signals

Some examples of the classifier backbone 404 and the classifier block 410 of FIG. 4 will now be described in detail. Particularly, FIG. 5A illustrates a modified architecture of the classifier backbone utilized by the anomaly detection system of FIG. 4 while FIG. 5B illustrates an exemplar structure of the classifier backbone utilized by the anomaly detection system of FIG. 4, according to some example embodiments. FIG. 5C illustrates an exemplar structure of a classifying neural network utilized by the anomaly detection system of FIG. 4, according to some example embodiments.

For example, the signal 252 may be an acoustic signal from a machine. In this embodiment, the classifier backbone i.e., the embedding neural network 220 of FIG. 2A may be, for example, an adapted version of the MobileFaceNet architecture as shown in FIG. 5A. Referring to FIG. 5A, the main necessary modification is for the global depthwise convolution (Linear GDC) layer where the kernel size is changed from 7×7 to 1×33. All convolutions are 2D. dw-Conv refers to depth-wise convolution. For each layer, the expansion factor (t), number of channels (c), number of repeats (n), and stride (s) are shown. All convolutions excluding the final linear layers use Parametric Rectified Linear Unit (PreLU) as the non-linearity.

FIG. 5B illustrates an exemplar structure of the classifier backbone 404 i.e., the embedding neural network utilized by the anomaly detection system of FIG. 4, according to some example embodiments. In some embodiments, the embedding neural network may receive an input data sample 502. For example, that input data sample 502 may correspond to a block of short-time Fourier transform frames from an audio signal. That input data sample may be processed by a 2-dimensional convolutional layer 504 which may output as result a hidden data sample which may also be referred to as a hidden vector. The convolutional layer 504 may comprise a succession of three operations, which may be a convolution operation, a batch normalization operation and a pointwise parametric rectified linear operation.

The hidden data sample output from the layer 504 may be further processed by a 2-dimensional depthwise convolutional layer 506 which may output another hidden vector. The depthwise convolutional layer 506 may comprise a succession of three operations, which may be a depthwise convolution operation, a batch normalization operation and a pointwise parametric rectified linear operation.

The hidden data sample output by the layer 506 may be further processed by a succession of N bottleneck layer 508. The input of the first bottleneck layer 508A may be the second hidden data sample. For each of the n^{th} bottleneck layers (i.e., from the one succeeding 508a to 508N), the hidden data sample input to that layer operation may be the hidden data sample output from the previous ((n-1)th) bottleneck layer operation. The hidden data sample output by the Nth bottleneck 508N may be further processed by a 2-dimensional convolutional layer 510, which may output another hidden data sample. The layer 510 may comprise a succession of three operations, which may be a convolution operation, a batch normalization operation and a pointwise parametric rectified linear operation.

The hidden data sample output from the layer 510 may be further processed by a 2-dimensional global depthwise convolutional layer 512 which outputs another hidden data sample. The depthwise convolutional layer 512 may comprise a succession of two operations, which may be a depthwise convolution operation and a batch normalization operation.

These hidden data samples may be further processed by a linear layer 514. The linear layer 514 may output an embedding data sample 516. The linear layer comprises a succession of two operations, which may be a linear operation and a batch normalization operation.

Each convolution and depthwise convolution in the sequence of aforementioned operations may be characterized by a set of parameters. Those parameters may be a pair of integer numbers corresponding to the span of a 2-dimensional convolution operation kernel, an integer number corresponding to a stride of the convolution operation stride and an integer number corresponding to a number of channels. The aforementioned linear operation may further be characterized by a set of parameters. Those parameters may be a single integer number corresponding to a number of channels (which in some embodiments may be called an embedding dimension).

Each bottleneck layer operation may process an input (hidden) data sample 522 with a succession of operations. Each of the bottleneck layers 508 may be characterized by a set of parameters. Those parameters may be an integer number corresponding to a bottleneck stride, an integer number corresponding to a bottleneck number of output channels, an integer number corresponding to a bottleneck expansion factor. The input data sample 522 may be processed by a 2-dimensional convolutional layer 524 which may output an internal hidden data sample. The convolutional layer 524 may comprise a succession of three operations, which may be a convolution operation, a batch normalization operation and a pointwise parametric rectified linear operation.

The internal hidden data sample output by the layer 524 may be further processed by a 2-dimensional depthwise convolutional layer 526 which may output another internal hidden data sample. The depthwise convolutional layer 526 may also comprise a succession of three operations, which may be a depthwise convolution operation, a batch normalization operation and a pointwise parametric rectified linear operation. This internal hidden data sample may be further processed by a 2-dimensional convolutional layer 528 which may output another internal hidden data sample. The convolutional layer 528 may comprise a succession of two operations, which may be a convolution operation and a batch normalization.

In some embodiments, the aforementioned 2-dimensional depthwise convolutional layer operation may be set with a stride of 1 or 2 depending on the bottleneck layer operation preferred settings. If the stride is set to 1 and the input hidden data sample and the last internal hidden data sample have the same number of channels, this last internal hidden data sample may be added to the input hidden data sample of the bottleneck layer operation to form another internal hidden data sample. The last internal hidden data sample that is computed may be an output data sample 530 of the bottleneck layer operation. Each convolution and depthwise convolution operation may have a kernel size of span 1x1. The first convolution layer 524 may output an internal hidden data sample whose dimension may be the dimension of the input hidden data sample of the block multiplied by a bottleneck expansion factor. The depthwise convolution layer 526 may take as input an internal hidden data sample whose dimension may be the dimension of the input hidden data sample of the bottleneck block multiplied by a bottleneck expansion factor and output an internal hidden data sample whose dimension may be the dimension of the input data sample to the bottleneck block multiplied by a bottleneck expansion factor. The depthwise convolution operation may further have a stride corresponding to a bottleneck stride. The second convolution operation may take as input an internal hidden data sample whose dimension may be the dimension of the input hidden data sample of the bottleneck block multiplied by a bottleneck expansion factor and output an internal hidden data sample whose dimension may be a bottleneck number of output channels. Each aforementioned convolution operation, depthwise convolution operation and linear operation may not use a biasing component. The hidden data samples as well as the embedding data sample may be expressed as coordinates in a Euclidean space.

According to some example embodiments, the parameters defined with reference to FIG. 5B and the number of bottleneck layers 508 may be configured following the information illustrated in FIG. 5A.

FIG. 5C illustrates an exemplar structure of a classifying neural network 410 utilized by the anomaly detection system of FIG. 4, according to some example embodiments. In some embodiments, an input embedding data sample 552 expressed as coordinates in Euclidean space. The number of coordinates may correspond to an embedding dimension (or size). This embedding data sample may be further processed by a mapping function operation 554 which may output another embedding data sample 556 now expressed as coordinates in a chosen mapped space. This embedding data sample may be further processed by a logit function operator 558 which may output a logit data sample 560. This logit data sample may express probabilities that the input embedding data sample belongs to some preset classes. The number of probability numbers may be equal to the number of preset classes.

In some embodiments, the mapping function operation 554 may correspond to an mapping between coordinates in an Euclidean space and coordinates in an hyperbolic space. In some other embodiments, the mapping between coordinates in an Euclidean space and coordinates in an hyperbolic space may be approximated by a mapping between coordinates in an Euclidean space and coordinates in a Poincaré ball space. In this context, the output embedding data sample from the mapping function operation 554 may be an embedding data sample expressed as coordinates in hyperbolic space, or Poincaré ball space as appropriate. In some embodiments, the logit function operation 558 may correspond to an hyperbolic multilinear regression function operation.

### Hyperbolic spaces

A hyperbolic space of dimension n is the unique simply connected, n-dimensional Riemannian manifold of a constant sectional curvature. There are many ways to construct a hyperbolic space as an open subset of ${ℝ}^{n}$ (the real coordinate space of dimension n) with an explicitly written Riemannian metric; such constructions are referred to as models. Some example embdiments, define a hyperbolic space as a unique simply connected, *n*-dimensional complete Riemannian manifold with a constant negative sectional curvature equal to -c. Thus, the hyperbolic spaces are constructed as models for *n-*dimensional hyperbolic geometry in which the points of the hyperbolic geometry lie in an *n*-dimensional open subset of the real coordinate space of dimension *n*. Some examples of the hyperbolic geometry model is a Poincaré disk, a Poincaré ball or sphere. While some concepts described herein are done in the context of a Poincaré ball, it may be contemplated that example embodiments described herein are not limited to any specific model of hyperbolic geomtery nor any value of the constant negative curvature.

Riemannian geometry generalizes Euclidean geometry, by which an n-D Riemannian manifold is any pair of an *n*-D differentiable manifold and a so-called metric tensor field. In the context of that theory, a Euclidean manifold is simply a differentiable manifold whose metric tensor field is the identity everywhere. On the other hand, a hyperbolic manifold is any Riemannian manifold with negative constant sectional curvature. Interestingly, even though hyperbolic spaces are not vector spaces in the traditional sense, the ability to find equivalents in hyperbolic space is a task of interest to many typical vector operations found in deep learning. Due to the challenges of embedding isometrically a hyperbolic space into Euclidean space, models of hyperbolic geometry should be used by which a subset of Euclidean space is endowed with a hyperbolic metric. One common model is the *n*-D Poincaré ball with unit curvature defined on the manifold of the *n*-D unit ball ${D}^{n} = \left\{x∈{ℝ}^{n}:\left‖x\right‖<1\right\}$ endowed with the metric tensor field $\frac{2}{1 - {\left‖x\right‖}^{2}} {I}^{n}$ with **I*ⁿ*** the identity. Other hyperbolic spaces with non-unit curvature may also be considered.

FIG. 6 illustrates a two-dimensional (2D) Poincaré ball 600 showing hyperbolic space, according to some example embodiments. In the Poincaré ball model for hyperbolic geometry, a line is represented as an arc of a circle whose ends are perpendicular to the disk's boundary (and diameters are also permitted). Two arcs which do not meet correspond to parallel rays, arcs which meet orthogonally correspond to perpendicular lines, and arcs which meet on the boundary are a pair of limits rays. Each of the hyperbolic embeddings is visually indicated as a dot, cross or some visual mark at a certain location on the Poincaré ball. The location of a hyperbolic embedding on the Poincaré ball is calculated based on the audio signal spectrogram and the value of the corresponding set of time-frequency (T-F) bins, such as the set of T-F bins belonging to a given frame. Information associated with each hyperbolic embedding includes information of the original sound corresponding to the set of T-F bins. Each value on the Poincaré ball includes some information about the original sound or the input audio signal. Advantageously, the hyperbolic embeddings preserve hierarchical information associated with the original sound while Euclidean embeddings do not. Hierarchical representation in Euclidean space is not very compact and requires a lot of space memory wise. On the other hand, representing the hierarchy on Poincaré ball is advantageous since the hyperbolic representation requires less memory and is less computationally extensive since it compactly represents hierarchy. Further, there is an advantage of getting a visual representation of the sound. Compared to non-hierarchical networks, lower dimension embedding may be used.

A hyperbolic hyperplane *H_{pₖ,aₖ}* is defined by a point *pₖ* and a vector *aₖ.* For a given point z, the distance 602 to *H_{pₖ,aₖ}* corresponds to geodesic distance ${d}_{D} \left(z, {H}_{{p}_{k} , {a}_{k}}\right)$. Embeddings near the origin 604 have low certainty, and embeddings near the edges 506 have high certainty. In this model, the geodesic (i.e., shortest-path) distance between 2 points denoted x and y is ${d}_{D} \left(x, y\right) = {cosh}^{- 1} \left(1+2\frac{{\left‖x-y\right‖}^{2}}{\left(1-{\left‖x\right‖}^{2}\right) \left(1-{\left‖y\right‖}^{2}\right)}\right)$ (1)

The "exponential map" may be defined as a mapping from the Euclidean space ${ℝ}^{n}$ to the Poincaré ball space, by associating a vector $u ∈ {ℝ}^{n}$ to the point reached from $0 ∈ {D}^{n}$ in unit time following the geodesic with initial tangent vector ***u*.** The reverse map is the "logarithmic map" expressed as ${exp}_{D} \left(u\right) = tanh \left‖u\right‖ ⋅ \frac{u}{\left‖u\right‖} and {log}_{D} \left(v\right) = {tanh}^{- 1} \left‖v\right‖ ⋅ \frac{v}{\left‖v\right‖}$ (2)

### Hyperbolic Embeddings

A common practice in deep learning approaches for classification tasks is to designate the vectors generated by some hidden layer such as the deepest hidden layer, as embeddings. The embeddings obtained from neural networks trained for general classification have often been found to be useful alternative representations of the input data, where it is expected that the embeddings' distribution starts encoding high-level characteristics of the data as they become better representations for classification. As such, they are often leveraged for downstream tasks different from the original classification task.

Hyperbolic spaces possess geometric properties that make them specifically appealing in that context. In particular, their volume grows exponentially as we get further from the origin, unlike in Euclidean space where volume grows polynomially. As a result, it is possible to embed tree structures in a hyperbolic space with arbitrary low distortion. At the same time, the geodesic distance between two points behaves similarly as the distance between two nodes in a tree. As such, hierarchical characteristics may be expected to be effectively encoded in that space. Concurrently, high-level aspects of many typical datasets may be expected to exhibit natural hierarchies. Hence, some example embodiments realized the benefit in many applications in mapping the embeddings generated by a deep neural network to a hyperbolic space before performing the geometric equivalent of a multinomial regression in that space using hyperplanes such as the one shown in FIG. 6. It may be noted that since all vectors in the network except for these mapped embeddings are in Euclidean space, this type of approach is usually hybrid.

According to some example embodiments, each hyperbolic embedding corresponds to a vector indicative of a unique attribute type associated with the machine. The unique attribute type may be an identifier of the machine, a model, make, year of manufacture, class of the machine, a section identifier of the machine and the like.

### Training of models

With reference to the configurations of FIG. 2A and 4, for the anomaly detection system and baselines, one classifier is trained per machine type, with each learning to recognize the machine section from which a given block of magnitude STFT frames comes from. In some embodiments, the number of sections for each machine type may be 6. In that context, a cross-entropy loss may be applied to the output logits. Formally, for the *i^{th}* input magnitude STFT block ${X}^{\left(i\right)} ∈ {ℝ}_{+}^{32 \times 1025}$ generating an output logit vector ${y}^{\left(i\right)} ∈ {ℝ}^{6}$ whose ground truth class/section is *kᵢ,* the loss may be expressed as: $L \left({y}^{\left(i\right)}\right) = log \frac{exp {y}_{{k}_{i}}^{\left(i\right)}}{{\sum }_{k = 1}^{6} exp {y}_{k}^{\left(i\right)}}$ (3)

For the hyperbolic model, some example embodiments use the Riemannian Adam optimizer. For the baselines, the regular PyTorch 1.10 Adam optimizer may be used. A learning rate of 10⁻⁴ may be used as default parameters otherwise, and each system may be trained for 1000 epochs, with checkpoints every 25 epochs.

### Scoring

The score of a given signal segment is based on the negative logit corresponding to the ground truth section of that signal segment. In the case where a given signal is split in multiple segments, the score of the signal becomes the segment-average of the score. In other words, if *ψₛ*(**x***ₖ*) denotes the predicted probability that the *k*^{th} segment of a signal **x,** of ground truth section or machine **t,** belongs to section or machine s, the score 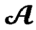 may be given as:

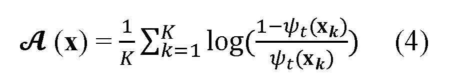

For hyperbolic embeddings, the opposite segment-average geodesic distance to the origin in the Poincaré ball is also considered for computing anomaly score, on correlating that distance with an idea of classifier uncertainty. In other words, the score

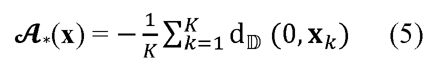

The two scores 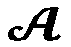 and 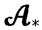 may be ensembled. Since the range of 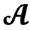 (resp. 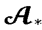 ) is ]-∞,∞[ (resp. ]-∞, 0]), we first apply its typical mapping to [0, 1], i.e., the sigmoid (resp. 1 + tanh). Then, using a weight *w* tuned at validation, the score 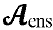 may be given as:

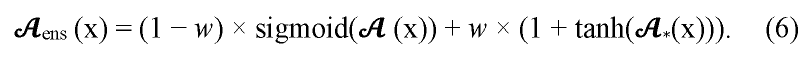

### Exemplar Systems

FIG. 7 illustrates a block diagram of a training configuration 700 of an example anomaly detection system using acoustic signals for anomaly detection, according to some example embodiments. A sound signal 702 is fragmented into frames and fed to an embedding neual network 720 that produces Euclidean embeddings. These Euclidean embeddings are converted by a converter 723 to obtain a mapping of the Eucidean embeddings in hyperbolic space. The hyperbolic space is illustrated as a Poincare ball 725. For example, considering three sources of sound contributing to the sound signal 702, the corresponding embeddings (dark, shaded, and unshaded) for each source type are shown in the hyperbolic space. That is, in the training phase illustrated in FIG. 7, sounds coming from 3 different types of machines functioning normally are presented separately. However, there may be fewer or more number of sources available for learning. The embedding neural network 720 generates an embedding in Euclidean space (i.e., a vector of numbers) for each frame of sound (a frame typically has a fixed time duration). Using the Euclidean to hyperbolic converter, the embeddings are ultimately located in the hyperbolic space. Then, the hyperbolic embedding is fed to a classifier neural network 730 which finds geometric boundaries 737 between the different types of machines represented in the hyperbolic space 735. The classifier is then a "linear" classifier in hyperbolic space. By the nature of the space's geometry, "linear" boundaries (i.e., hyperplanes) are not lines but arcs for example as shown as 737 in FIG. 7. The embeddings 732, 734, and 737 each belongs to a unique source type. A variety of examples in a training process may be presented, optimizing both the embedding and classifier networks such that the classifier learns boundaries for which the type of machine is detected correctly as often as possible.

FIG. 8A illustrates a block diagram of an example run time configuration 800 of the trained anomaly detection system of FIG. 7, according to some example embodiments. In the inference phase (run time), sound 802 from a particular machine is presented to the trained anomaly detection system. For the particular machine, the type and other metadata or attributes may be known beforehand, but whether the machine is functioning normally or not is not known. The embedding for that sound snippet is calculated by the embedding neural network 820 and a converter 825 converts the Euclidean embeddings to hyperbolic embeddings 827. The hyperbolic embedding is fed to the classifier network 830, which output the probabilities 832 that a particular sound snippet belongs to the different known types of machines with particular metadata or attributes, depending on the position of the embedding with respect to the trained type boundaries in the hyperbolic space. In some example embodiments, only the probabilities 832 calculated by the classifier network 830, and in particular, the calculated probability 834 that a sound snippet belongs to the known type of machine, may be relied upon to compute the anomaly score. Such a system benefits from the hyperbolic geometry, by virtue of being a more "natural" space to locate the embeddings and learn a good set of hyperplanes in the classifier. As such, the proposed hyperbolic system shown in FIG. 8A can 1) generate a more reliable anomaly score and, accessorily, 2) use a lesser number of dimensions to achieve the same performance, saving computational time and memory.

However, in order to improve the reliability of the anomaly score, some example embodiments aggregate the probabilities 832, 834 and/or some intrinsic geometric aspect of the embedding location in the embedding space, to generate an anomaly score. In this regard, some example embodiments recognize that unlike in Euclidean space, the origin (center) of the hyperbolic space has a unique meaning. Some embodiments are based on recognition that additionally to the anomaly score determined based on the classification of the hyperbolic embedding, the location of the hyperbolic embedding with respect to the origin of the hyperbolic space provides additional clues relevant for anomaly detection. This is because the results of classifying depend not only on the data but on the training of the classifier, but the location with respect to the origin depends on the quality of the data and can be independent of the classification. Due to training primarily on normal data, such an indicator about the quality of the input data can be advantageous. Notably, the anomaly indicator dependent on the distance to the origin of the embedding space is not available for Euclidean spaces.

Referring to FIG. 8B, some example embodiments utilize the correlation between the distance 829 of an embedding to the origin of the Poincaré ball 827 and some notion of certainty (informed by the training data and the classification task), pushing data with high "certainty" closer to the edge of the hyperbolic space (the circumference periphery of the Poincaré ball 827). As such, FIG. 8B proposes looking at the geodesic distance 836 of each embedding from the origin as measure of its level of anomaly, with embeddings closer to the origin considered to be more anomalous. Therefore, the anomaly detection system shown in FIG. 8B utilizes an aggregator 880 to aggregate the geodesic distance 836 of each embedding relative to the origin and the corresponding probability 834 of the embedding computed by the classifier 830 to compute the anomaly score 804. The higher the score, the more likely the sound snippet is anomalous.

FIG. 9 illustrates a hardware configuration of an example anomaly detection system 900, according to some example embodiments. The anomaly detection system 900 may include a processor 902, a memory 904, an output interface 906, and an input interface 908. The processor 902 may be communicatively coupled to the memory 904, the output interface 906, and the input interface 908. In some embodiments, the output interface 906 may be coupled to a display device.

The processor 902 may include suitable logic, circuitry, and/or interfaces that may be configured to execute program instructions associated with different operations to be executed by the anomaly detection system 900. The processor 902 may include one or more specialized processing units, which may be implemented as an integrated processor or a cluster of processors that perform the functions of the one or more specialized processing units, collectively. The processor 902 may be implemented based on a number of processor technologies known in the art. Examples of implementations of the processor 902 may be an x86-based processor, a Graphics Processing Unit (GPU), a Reduced Instruction Set Computing (RISC) processor, an Application-Specific Integrated Circuit (ASIC) processor, a Complex Instruction Set Computing (CISC) processor, a microcontroller, a central processing unit (CPU), and/or other computing circuits.

The memory 904 may include suitable logic, circuitry, and/or interfaces that may be configured to store program instructions to be executed by the processor 902. The memory 904 may be further configured to store the trained neural networks such as the embedding neural network or the embedding classifier. Without deviating from the scope of the disclosure, trained neural networks such as the embedding neural network and the embedding classifier may also be stored in a database. Example implementations of the memory 904 may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card.

The output interface 906 may include suitable logic, circuitry, interfaces, and/or code that may be configured to receive an input and provide an output based on the received input. The output interface 906 may include various input and output devices, which may be configured to communicate with the processor 902. For example, the anomaly detection system 900 may receive a user input via the input interface 908 to select a region on the hyperbolic space or a hyperplane on the hyperbolic space. Examples of the input interface 908 may include, but are not limited to, a touch screen, a keyboard, a mouse, a joystick, or a microphone.

The input interface 908 may also include suitable logic, circuitry, interfaces, and/or code that may be configured to facilitate the processor 902 to communicate with a database and/or other communication devices, via the communication network 910. The input interface 908 may be implemented by use of various known technologies to support wireless communication of the anomaly detection system 900 via communication network 910. The input interface 908 may include, for example, an antenna, a radio frequency (RF) transceiver, one or more amplifiers, a tuner, one or more oscillators, a digital signal processor, a coder-decoder (CODEC) chipset, a subscriber identity module (SIM) card, a local buffer circuitry, and the like.

The input interface 908 may be configured to communicate via the communication network 910. The network 910 comprises wired or wireless communication with networks, such as the Internet, an Intranet, a wireless network, a cellular telephone network, a wireless local area network (LAN), or a metropolitan area network (MAN). The wireless communication may be configured to use one or more of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), or Worldwide Interoperability for Microwave Access (Wi-MAX).

The following description of the exemplary embodiments will provide those skilled in the art with an enabling description for implementing one or more exemplary embodiments. Contemplated are various changes that may be made in the function and arrangement of elements without departing from the scope of the invention as set forth in the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments. The above-described embodiments of the present disclosure can be implemented in any of numerous ways. For example, the embodiments may be implemented using hardware, software, or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments.

Although the present disclosure has been described with reference to certain preferred embodiments, it is to be understood that various other adaptations and modifications can be made insofar they fall within the scope of the invention as solely defined by the appended claims.

## Claims

1. An anomaly detection system (100, 900) to detect an anomaly of an operation of a machine (302) based on a signal (102, 202, 306) indicative of the operation of the machine (302) performing a task, wherein the signal indicative of the operation of the machine (302) comprises one or a combination of audio signals, video signals and/or vibration signals captured by one or more sensors in an environment in which the machine (302) operates, the system comprising:
at least one processor (902); and
memory (904) having instructions stored thereon that, when executed by the at least one processor, cause the anomaly detection system to:
receive (152) the signal indicative of the operation of the machine (302), the signal comprising a plurality of segments corresponding to a time-varying observation of the machine (302);
process the signal with an embedding neural network (20) to generate (156) a plurality of Euclidean embeddings for the received signal, wherein each Euclidean embedding of the plurality of Euclidean embeddings corresponds to a segment of the plurality of segments of the received signal;
convert (156) the plurality of Euclidean embeddings into a plurality of hyperbolic embeddings, based on projection of each Euclidean embedding of the plurality of Euclidean embeddings into a hyperbolic space;
process each hyperbolic embedding of the plurality of hyperbolic embeddings with a classifying neural network (30) to compute (158) an attribute probability of each hyperbolic embedding of the plurality of hyperbolic embeddings, wherein the attribute probability of each hyperbolic embedding is a probability of the segment associated with the corresponding hyperbolic embedding being a known type of attribute of the machine (302), based on a position of the corresponding hyperbolic embedding in the hyperbolic space with respect to learned attribute type boundaries of the classifying neural network (30) in the hyperbolic space;
compute (160) a segment anomaly score for each hyperbolic embedding of the plurality of hyperbolic embeddings, based on the attribute probability of the corresponding hyperbolic embedding;
aggregate the segment anomaly scores for the plurality of hyperbolic embeddings to compute an anomaly score (104) for the operation of the machine; and
render the anomaly score for the operation of the machine (302).

2. The anomaly detection system (100, 900) of claim 1, wherein the at least one processor (902) is further configured to process, measurements of the signal or features extracted from the measurements, with the embedding neural network (20), to produce the plurality of Euclidean embeddings of the signal in Euclidean space; and project the plurality of Euclidean embeddings into the hyperbolic space to produce the plurality of hyperbolic embeddings.

3. The anomaly detection system (100, 900) of claim 1, wherein the classifying neural network (30) is trained with training data generated from non-anomalous operations of the machine (302), wherein the non-anomalous operations of the machine (302) are defined relative to standard operating performance data of the machine (302).

4. The anomaly detection system (100, 900) of claim 1, wherein the embedding neural network (20) is jointly trained with the classifying neural network (30) such that weights of the embedding and classifying neural networks are interdependent on each other.

5. The anomaly detection system (100, 900) of claim 1, wherein the segment anomaly score of each hyperbolic embedding of the plurality of hyperbolic embeddings is a function of a combination of a distance between the corresponding hyperbolic embedding and an origin of the hyperbolic space and an attribute probability score of the corresponding hyperbolic embedding.

6. The anomaly detection system (100, 900) of claim 1, wherein the hyperbolic space is approximated by projection on one of a Poincaré ball or a Poincaré disk, and the segment anomaly score of a hyperbolic embedding of the plurality of hyperbolic embeddings is a function of a distance between the hyperbolic embedding of the plurality of hyperbolic embeddings and an origin of one of the Poincaré ball or the Poincaré disk.

7. The anomaly detection system (100, 900) of claim 1, wherein each hyperbolic embedding of the plurality of hyperbolic embeddings corresponds to a vector indicative of a unique attribute type associated with the machine (302).

8. The anomaly detection system (100, 900) of claim 1, wherein the signal (102, 202, 306) indicative of the operation of the machine (302) is an audio signal produced in an operating environment of the machine (302), wherein a source of the audio signal and the operating environment are **characterized by** a set of attributes, wherein each hyperbolic embedding of the plurality of hyperbolic embeddings corresponds to a vector indicative of a unique attribute from the set of attributes.

9. The anomaly detection system (100, 900) of claim 1, further comprising a display device (310) configured to display the rendered anomaly score.

10. A computer-implemented method (150) to detect an anomaly of an operation of a machine (302) based on a signal (102, 202, 306) indicative of the operation of the machine (302) performing a task, wherein the signal indicative of the operation of the machine (302) comprises one or a combination of audio signals, video signals and/or vibration signals captured by one or more sensors in an environment in which the machine (302) operates, the method comprising:
receiving (152) the signal indicative of the operation of the machine (302), the signal comprising a plurality of segments corresponding to a time-varying observation of the machine (302);
processing the signal with an embedding neural network (20) to generate (156) a plurality of Euclidean embeddings for the received signal, wherein each Euclidean embedding of the plurality of Euclidean embeddings corresponds to a segment of the plurality of segments of the received signal;
converting (156) the plurality of Euclidean embeddings into a plurality of hyperbolic embeddings, based on projection of each Euclidean embedding of the plurality of Euclidean embeddings into a hyperbolic space;
processing each hyperbolic embedding of the plurality of hyperbolic embeddings with a classifying neural network to compute (158) an attribute probability of each hyperbolic embedding of the plurality of hyperbolic embeddings, wherein the attribute probability of each hyperbolic embedding is a probability of the segment associated with the corresponding hyperbolic embedding being a known type of attribute of the machine (302), based on a position of the corresponding hyperbolic embedding in the hyperbolic space with respect to learned attribute type boundaries of the classifying neural network (30) in the hyperbolic space;
computing (160) a segment anomaly score for each hyperbolic embedding of the plurality of hyperbolic embeddings, based on the attribute probability of the corresponding hyperbolic embedding;
aggregating the segment anomaly scores for the plurality of hyperbolic embeddings to compute an anomaly score (104) for the operation of the machine (302); and
rendering the anomaly score for the operation of the machine (302).

11. A non-transitory computer-readable storage medium having stored thereon a program comprising instructions which, when executed by a processor (209), cause the processor (902) to perform a method (150) to detect an anomaly of an operation of a machine (302) based on a signal (102, 202, 306) indicative of the operation of the machine (302) performing a task, wherein the signal indicative of the operation of the machine (302) comprises one or a combination of audio signals, video signals and/or vibration signals captured by one or more sensors in an environment in which the machine (302) operates, the method comprising:
receiving (152) the signal indicative of the operation of the machine (302), the signal comprising a plurality of segments corresponding to a time-varying observation of the machine (302);
processing the signal with an embedding neural network (20) to generate (156) a plurality of Euclidean embeddings for the received signal, wherein each Euclidean embedding of the plurality of Euclidean embeddings corresponds to a segment of the plurality of segments of the received signal;
converting (156) the plurality of Euclidean embeddings into a plurality of hyperbolic embeddings, based on projection of each Euclidean embedding of the plurality of Euclidean embeddings into a hyperbolic space;
processing each hyperbolic embedding of the plurality of hyperbolic embeddings with a classifying neural network to compute (158) an attribute probability of each hyperbolic embedding of the plurality of hyperbolic embeddings, wherein the attribute probability of each hyperbolic embedding is a probability of the segment associated with the corresponding hyperbolic embedding being a known type of attribute of the machine (302), based on a position of the corresponding hyperbolic embedding in the hyperbolic space with respect to learned attribute type boundaries of the classifying neural network (30) in the hyperbolic space;
computing (160) a segment anomaly score for each hyperbolic embedding of the plurality of hyperbolic embeddings, based on the attribute probability of the corresponding hyperbolic embedding;
aggregating the segment anomaly scores for the plurality of hyperbolic embeddings to compute
an anomaly score (104) for the operation of the machine (302); and
rendering the anomaly score for the operation of the machine (302).

## Patentansprüche

1. Anomalie-Erkennungssystem (100, 900), um eine Anomalie in einem Betrieb einer Maschine (302) auf der Grundlage eines Signals (102, 202, 306), das den Betrieb der Maschine (302) bei Ausführung einer Aufgabe anzeigt, zu erkennen, wobei das den Betrieb der Maschine (302) anzeigende Signal eines von oder eine Kombination aus Audiosignalen, Videosignalen und/oder Vibrationssignalen umfasst, die von einem oder mehreren Sensoren in einer Umgebung erfasst werden, in der die Maschine (302) betrieben wird, wobei das System umfasst:
zumindest einen Prozessor (902); und
einen Speicher (904) mit darauf gespeicherten Anweisungen, die, bei Ausführung durch den zumindest einen Prozessor, das Anomalie-Erfassungssystem veranlassen zum:
Empfangen (152) des Signals, das den Betrieb der Maschine (302) anzeigt, wobei das Signal eine Vielzahl von Segmenten umfasst, die einer zeitabhängigen Beobachtung der Maschine (302) entsprechen;
Verarbeiten des Signals mit einem einbettenden neuronalen Netz (20), um eine Vielzahl euklidischer Einbettungen für das empfangene Signal zu generieren (156), wobei jede euklidische Einbettung aus der Vielzahl euklidischer Einbettungen einem Segment aus der Vielzahl von Segmenten des empfangenen Signals entspricht;
Konvertieren der Vielzahl euklidischer Einbettungen (156) in eine Vielzahl hyperbolischer Einbettungen, basierend auf einer Projektion jeder euklidischen Einbettung aus der Vielzahl euklidischer Einbettungen in einen hyperbolischen Raum;
Verarbeiten jeder hyperbolischen Einbettung aus der Vielzahl hyperbolischer Einbettungen mit einem klassifizieneuronalen Netz (30), um eine Attributwahrscheinlichkeit für jede hyperbolische Einbettung aus der Vielzahl hyperbolischer Einbettungen zu berechnen (158), wobei die Attributwahrscheinlichkeit jeder hyperbolischen Einbettung eine Wahrscheinlichkeit dafür ist, dass das der entsprechenden hyperbolischen Einbettung zugeordnete Segment ein bekannter Attributtyp der Maschine (302) ist, basierend auf einer Position der entsprechenden hyperbolischen Einbettung im hyperbolischen Raum in Bezug auf gelernte Attributtypgrenzen des klassifizierenden neuronalen Netzes (30) im hyperbolischen Raum;
Berechnen (160) eines Segment-Anomalie-Scores für jede hyperbolische Einbettung aus der Vielzahl hyperbolischer Einbettungen auf der Grundlage der Attributwahrscheinlichkeit der entsprechenden hyperbolischen Einbettung;
Aggregieren der Segment-Anomalie-Scores für die Vielzahl hyperbolischer Einbettungen, um einen Anomalie-Score (104) für den Betrieb der Maschine zu berechnen; und
Rendern des Anomalie-Scores für den Betrieb der Maschine (302).

2. Anomalie-Erfassungssystem (100, 900) nach Anspruch 1, wobei der zumindest eine Prozessor (902) ferner eingerichtet ist,
Messungen des Signals oder aus den Messungen extrahierte Merkmale mit dem einbettenden neuronalen Netz (20) zu verarbeiten, um die Vielzahl euklidischer Einbettungen des Signals im euklidischen Raum zu erzeugen; und
die Vielzahl euklidischer Einbettungen in den hyperbolischen Raum zu projizieren, um die Vielzahl hyperbolischer Einbettungen zu erzeugen.

3. Anomalie-Erfassungssystem (100, 900) nach Anspruch 1, wobei das klassifizierende neuronale Netz (30) mit Trainingsdaten trainiert wird, die aus nicht-anomalen Betrieben der Maschine (302) generiert wurden, wobei die nicht-anomalen Betriebe der Maschine (302) bezogen auf Standard-Betriebsleistungsdaten der Maschine (302) definiert sind.

4. Anomalie-Erfassungssystem (100, 900) nach Anspruch 1, wobei das einbettende neuronale Netz (20) gemeinsam mit dem klassifizierenden neuronalen Netz (30) trainiert wird, so dass Gewichtungen des einbettenden und des klassifizierenden neuronalen Netzes voneinander abhängig sind.

5. Anomalie-Erfassungssystem (100, 900) nach Anspruch 1, wobei der Segment-Anomalie-Score jeder hyperbolischen Einbettung aus der Vielzahl hyperbolischer Einbettungen eine Funktion einer Kombination aus einer Distanz zwischen der entsprechenden hyperbolischen Einbettung und einem Ursprung des hyperbolischen Raums sowie einer Attribut-Wahrscheinlichkeits-Score der entsprechenden hyperbolischen Einbettung ist.

6. Anomalie-Erfassungssystem (100, 900) nach Anspruch 1, wobei der hyperbolische Raum durch Projektion entweder auf eine Poincaré-Kugel oder eine Poincaré-Scheibe approximiert wird, und der Segment-Anomalie-Score einer hyperbolischen Einbettung aus der Vielzahl hyperbolischer Einbettungen eine Funktion einer Distanz zwischen der hyperbolischen Einbettung aus der Vielzahl hyperbolischer Einbettungen und einem Ursprung entweder der Poincaré-Kugel oder der Poincaré-Scheibe ist.

7. Anomalie-Erfassungssystem (100, 900) nach Anspruch 1, wobei jede hyperbolische Einbettung aus der Vielzahl hyperbolischer Einbettungen einem Vektor entspricht, der einen der Maschine (302) zugeordneten eindeutigen Attributtyp angibt.

8. Anomalie-Erfassungssystem (100, 900) nach Anspruch 1, wobei das den Betrieb der Maschine (302) anzeigende Signal (102, 202, 306) ein Audiosignal ist, das in einer Betriebsumgebung der Maschine (302) erzeugt wird, wobei eine Quelle des Audiosignals und die Betriebsumgebung durch eine Menge von Attributen gekennzeichnet sind, wobei jede hyperbolische Einbettung aus der Vielzahl hyperbolischer Einbettungen einem Vektor entspricht, der einen der Maschine zugeordneten eindeutigen Attributtyp angibt.

9. Anomalie-Erfassungssystem (100, 900) nach Anspruch 1, ferner umfassend eine Darstellungseinrichtung (310), die eingerichtet ist, den gerenderten Anomalie-Score darzustellen.

10. Computerimplementiertes Verfahren (150), um eine Anomalie in einem Betrieb einer Maschine (302) auf der Grundlage eines Signals (102, 202, 306), das den Betrieb der Maschine (302) bei Ausführung einer Aufgabe anzeigt, zu erfassen, wobei das den Betrieb der Maschine (302) anzeigende Signal eines von oder eine Kombination aus Audiosignalen, Videosignalen und/oder Vibrationssignalen umfasst, die von einem oder mehreren Sensoren in einer Umgebung erfasst werden, in der die Maschine (302) betrieben wird, wobei das Verfahren umfasst:
Empfangen (152) des Signals, das den Betrieb der Maschine (302) anzeigt, wobei das Signal eine Vielzahl von Segmenten umfasst, die einer zeitabhängigen Beobachtung der Maschine (302) entsprechen,
Verarbeiten des Signals mit einem einbettenden neuronalen Netz (20), um eine Vielzahl euklidischer Einbettungen für das empfangene Signal zu generieren (156), wobei jede euklidische Einbettung aus der Vielzahl euklidischer Einbettungen einem Segment aus der Vielzahl von Segmenten des empfangenen Signals entspricht;
Konvertieren (156) der Vielzahl euklidischer Einbettungen in eine Vielzahl hyperbolischer Einbettungen basierend auf einer Projektion jeder euklidischen Einbettung aus der Vielzahl euklidischer Einbettungen in einen hyperbolischen Raum;
Verarbeiten jeder hyperbolischen Einbettung aus der Vielzahl hyperbolischer Einbettungen mit einem klassifizierenden neuronalen Netz, um eine Attributwahrscheinlichkeit für jede hyperbolische Einbettung aus der Vielzahl hyperbolischer Einbettungen zu berechnen (158), wobei die Attributwahrscheinlichkeit jeder hyperbolischen Einbettung eine Wahrscheinlichkeit dafür ist, dass das der entsprechenden hyperbolischen Einbettung zugeordnete Segment ein bekannter Attributtyp der Maschine (302) ist, basierend auf einer Position der entsprechenden hyperbolischen Einbettung im hyperbolischen Raum in Bezug auf gelernte Attributtypgrenzen des klassifizierenden neuronalen Netzes (30) im hyperbolischen Raum;
Berechnen (160) eines Segment-Anomalie-Scores für jede hyperbolische Einbettung der Vielzahl hyperbolischer Einbettungen auf der Grundlage der Attributwahrscheinlichkeit der entsprechenden hyperbolischen Einbettung;
Aggregieren der Segment-Anomalie-Scores für die Vielzahl hyperbolischer Einbettungen, um einen Anomalie-Score (104) für den Betrieb der Maschine (302) zu berechnen; und
Rendern des Anomalie-Scores für den Betrieb der Maschine (302).

11. Nichtflüchtiges, computerlesbares Speichermedium, auf dem ein Programm F gespeichert ist, das Anweisungen umfasst, die, wenn sie von einem Prozessor (209) ausgeführt werden, den Prozessor (902) dazu veranlassen, ein Verfahren (150) zur Erfassung einer Anomalie in einem Betrieb einer Maschine (302) auf der Grundlage eines Signals (102, 202, 306) auszuführen, das den Betrieb der Maschine (302) bei Ausführung einer Aufgabe anzeigt, wobei das den Betrieb der Maschine (302) anzeigende Signal eines von oder eine Kombination aus Audiosignalen, Videosignalen und/oder Vibrationssignalen umfasst, die von einem oder mehreren Sensoren in einer Umgebung erfasst werden, in der die Maschine (302) betrieben wird, wobei das Verfahren umfasst:
Empfangen (152) des Signals, das den Betrieb der Maschine (302) anzeigt, wobei das Signal eine Vielzahl von Segmenten umfasst, die einer zeitabhängigen Beobachtung der Maschine (302) entsprechen,
Verarbeiten des Signals mit einem einbettenden neuronalen Netz (20), um eine Vielzahl euklidischer Einbettungen für das empfangene Signal zu generieren (156), wobei jede euklidische Einbettung aus der Vielzahl euklidischer Einbettungen einem Segment aus der Vielzahl von Segmenten des empfangenen Signals entspricht;
Konvertieren (156) der Vielzahl euklidischer Einbettungen in eine Vielzahl hyperbolischer Einbettungen basierend auf einer Projektion jeder euklidischen Einbettung aus der Vielzahl euklidischer Einbettungen in einen hyperbolischen Raum;
Verarbeiten jeder hyperbolischen Einbettung aus der Vielzahl hyperbolischer Einbettungen mit einem klassifizierenden neuronalen Netz, um eine Attributwahrscheinlichkeit für jede hyperbolische Einbettung aus der Vielzahl hyperbolischer Einbettungen zu berechnen (158), wobei die Attributwahrscheinlichkeit jeder hyperbolischen Einbettung eine Wahrscheinlichkeit dafür ist, dass das der entsprechenden hyperbolischen Einbettung zugeordnete Segment ein bekannter Attributtyp der Maschine (302) ist, basierend auf einer Position der entsprechenden hyperbolischen Einbettung im hyperbolischen Raum in Bezug auf gelernte Attributtypgrenzen des klassifizierenden neuronalen Netzes (30) im hyperbolischen Raum;
Berechnen (160) eines Segment-Anomalie-Scores für jede hyperbolische Einbettung der Vielzahl hyperbolischer Einbettungen auf der Grundlage der Attributwahrscheinlichkeit der entsprechenden hyperbolischen Einbettung;
Aggregieren der Segment-Anomalie-Scores für die Vielzahl hyperbolischer Einbettungen, um einen Anomalie-Score (104) für den Betrieb der Maschine (302) zu berechnen; und
Rendern des Anomalie-Scores für den Betrieb der Maschine (302).

## Revendications

1. Un système de détection d'anomalie (100, 900) pour détecter une anomalie d'une opération d'une machine (302) sur la base d'un signal (102, 202, 306) indicatif de l'opération de la machine (302) effectuant une tâche, dans lequel le signal indicatif de l'opération de la machine (302) comprend un ou une combinaison de signaux audio, signaux vidéo et/ou signaux de vibration capturés par un ou plusieurs capteurs dans un environnement dans lequel la machine (302) fonctionne, le système comprenant :
au moins un processeur (902) ; et
une mémoire (904) ayant des instructions stockées sur celle-ci qui, lorsqu'elles sont exécutées par l'au moins un processeur, amènent le système de détection d'anomalie à :
recevoir (152) le signal indicatif de l'opération de la machine (302), le signal comprenant une pluralité de segments correspondant à une observation variant dans le temps de la machine (302) ;
traiter le signal avec un réseau neuronal de plongement (20) pour générer (156) une pluralité de plongements euclidiens pour le signal reçu, dans lequel chaque plongement euclidien de la pluralité de plongements euclidiens correspond à un segment de la pluralité de segments du signal reçu ;
convertir (156) la pluralité de plongements euclidiens en une pluralité de plongements hyperboliques, sur la base d'une projection de chaque plongement euclidien de la pluralité de plongements euclidiens dans un espace hyperbolique ;
traiter chaque plongement hyperbolique de la pluralité de plongements hyperboliques avec un réseau neuronal de classification (30) pour calculer (158) une probabilité d'attribut de chaque plongement hyperbolique de la pluralité de plongements hyperboliques, dans lequel la probabilité d'attribut de chaque plongement hyperbolique est une probabilité que le segment associé au plongement hyperbolique correspondant soit un type connu d'attribut de la machine (302), sur la base d'une position du plongement hyperbolique correspondant dans l'espace hyperbolique par rapport à des frontières de type d'attribut apprises du réseau neuronal de classification (30) dans l'espace hyperbolique ;
calculer (160) un score d'anomalie de segment pour chaque plongement hyperbolique de la pluralité de plongements hyperboliques, sur la base de la probabilité d'attribut du plongement hyperbolique correspondant ;
agréger les scores d'anomalie de segment pour la pluralité de plongements hyperboliques afin de calculer un score d'anomalie (104) pour l'opération de la machine ; et
restituer le score d'anomalie pour l'opération de la machine (302).

2. Le système de détection d'anomalie (100, 900) selon la revendication 1, dans lequel l'au moins un processeur (902) est en outre configuré pour
traiter, des mesures du signal ou des caractéristiques extraites des mesures, avec le réseau neuronal de plongement (20), afin de produire la pluralité de plongements euclidiens du signal dans l'espace euclidien ; et
projeter la pluralité de plongements euclidiens dans l'espace hyperbolique pour produire la pluralité de plongements hyperboliques.

3. Le système de détection d'anomalie (100, 900) selon la revendication 1, dans lequel le réseau neuronal de classification (30) est entraîné avec des données d'entraînement générées à partir d'opérations non anormales de la machine (302), dans lequel les opérations non anormales de la machine (302) sont définies par rapport à des données de performance de fonctionnement standard de la machine (302).

4. Le système de détection d'anomalie (100, 900) selon la revendication 1, dans lequel le réseau neuronal de plongement (20) est entraîné conjointement avec le réseau neuronal de classification (30) de telle sorte que des poids des réseaux neuronaux de plongement et de classification soient interdépendants les uns des autres.

5. Le système de détection d'anomalie (100, 900) selon la revendication 1, dans lequel le score d'anomalie de segment de chaque plongement hyperbolique de la pluralité de plongements hyperboliques est une fonction d'une combinaison d'une distance entre le plongement hyperbolique correspondant et une origine de l'espace hyperbolique et d'un score de probabilité d'attribut du plongement hyperbolique correspondant.

6. Le système de détection d'anomalie (100, 900) selon la revendication 1, dans lequel l'espace hyperbolique est approximé par projection sur l'une d'une boule de Poincaré ou d'un disque de Poincaré, et le score d'anomalie de segment d'un plongement hyperbolique de la pluralité de plongements hyperboliques est une fonction d'une distance entre le plongement hyperbolique de la pluralité de plongements hyperboliques et une origine de l'un de la boule de Poincaré ou du disque de Poincaré.

7. Le système de détection d'anomalie (100, 900) selon la revendication 1, dans lequel chaque plongement hyperbolique de la pluralité de plongements hyperboliques correspond à un vecteur indicatif d'un type d'attribut unique associé à la machine (302).

8. Le système de détection d'anomalie (100, 900) selon la revendication 1, dans lequel le signal (102, 202, 306) indicatif de l'opération de la machine (302) est un signal audio produit dans un environnement de fonctionnement de la machine (302), dans lequel une source du signal audio et l'environnement de fonctionnement sont **caractérisés par** un ensemble d'attributs, dans lequel chaque plongement hyperbolique de la pluralité de plongements hyperboliques correspond à un vecteur indicatif d'un attribut unique de l'ensemble d'attributs.

9. Le système de détection d'anomalie (100, 900) selon la revendication 1, comprenant en outre un dispositif d'affichage (310) configuré pour afficher le score d'anomalie restitué.

10. Un procédé mis en œuvre par ordinateur (150) pour détecter une anomalie d'une opération d'une machine (302) sur la base d'un signal (102, 202, 306) indicatif de l'opération de la machine (302) effectuant une tâche, dans lequel le signal indicatif de l'opération de la machine (302) comprend un ou une combinaison de signaux audio, signaux vidéo et/ou signaux de vibration capturés par un ou plusieurs capteurs dans un environnement dans lequel la machine (302) fonctionne, le procédé comprenant :
la réception (152) du signal indicatif de l'opération de la machine (302), le signal comprenant une pluralité de segments correspondant à une observation variant dans le temps de la machine (302) ;
le traitement du signal avec un réseau neuronal de plongement (20) pour générer (156) une pluralité de plongements euclidiens pour le signal reçu, dans lequel chaque plongement euclidien de la pluralité de plongements euclidiens correspond à un segment de la pluralité de segments du signal reçu ;
la conversion (156) de la pluralité de plongements euclidiens en une pluralité de plongements hyperboliques, sur la base d'une projection de chaque plongement euclidien de la pluralité de plongements euclidiens dans un espace hyperbolique ;
le traitement de chaque plongement hyperbolique de la pluralité de plongements hyperboliques avec un réseau neuronal de classification pour calculer (158) une probabilité d'attribut de chaque plongement hyperbolique de la pluralité de plongements hyperboliques, dans lequel la probabilité d'attribut de chaque plongement hyperbolique est une probabilité que le segment associé au plongement hyperbolique correspondant soit un type connu d'attribut de la machine (302), sur la base d'une position du plongement hyperbolique correspondant dans l'espace hyperbolique par rapport à des frontières de type d'attribut apprises du réseau neuronal de classification (30) dans l'espace hyperbolique ;
le calcul (160) d'un score d'anomalie de segment pour chaque plongement hyperbolique de la pluralité de plongements hyperboliques, sur la base de la probabilité d'attribut du plongement hyperbolique correspondant ;
l'agrégation des scores d'anomalie de segment pour la pluralité de plongements hyperboliques afin de calculer un score d'anomalie (104) pour l'opération de la machine (302) ; et
la restitution du score d'anomalie pour l'opération de la machine (302).

11. Un support de stockage lisible par ordinateur non transitoire ayant stocké sur celui-ci un programme comprenant des instructions qui, lorsqu'elles sont exécutées par un processeur (209), amènent le processeur (902) à effectuer un procédé (150) pour détecter une anomalie d'une opération d'une machine (302) sur la base d'un signal (102, 202, 306) indicatif de l'opération de la machine (302) effectuant une tâche, dans lequel le signal indicatif de l'opération de la machine (302) comprend un ou une combinaison de signaux audio, signaux vidéo et/ou signaux de vibration capturés par un ou plusieurs capteurs dans un environnement dans lequel la machine (302) fonctionne, le procédé comprenant :
la réception (152) du signal indicatif de l'opération de la machine (302), le signal comprenant une pluralité de segments correspondant à une observation variant dans le temps de la machine (302) ;
le traitement du signal avec un réseau neuronal de plongement (20) pour générer (156) une pluralité de plongements euclidiens pour le signal reçu, dans lequel chaque plongement euclidien de la pluralité de plongements euclidiens correspond à un segment de la pluralité de segments du signal reçu ;
la conversion (156) de la pluralité de plongements euclidiens en une pluralité de plongements hyperboliques, sur la base d'une projection de chaque plongement euclidien de la pluralité de plongements euclidiens dans un espace hyperbolique ;
le traitement de chaque plongement hyperbolique de la pluralité de plongements hyperboliques avec un réseau neuronal de classification pour calculer (158) une probabilité d'attribut de chaque plongement hyperbolique de la pluralité de plongements hyperboliques, dans lequel la probabilité d'attribut de chaque plongement hyperbolique est une probabilité que le segment associé au plongement hyperbolique correspondant soit un type connu d'attribut de la machine (302), sur la base d'une position du plongement hyperbolique correspondant dans l'espace hyperbolique par rapport à des frontières de type d'attribut apprises du réseau neuronal de classification (30) dans l'espace hyperbolique ;
le calcul (160) d'un score d'anomalie de segment pour chaque plongement hyperbolique de la pluralité de plongements hyperboliques, sur la base de la probabilité d'attribut du plongement hyperbolique correspondant ;
l'agrégation des scores d'anomalie de segment pour la pluralité de plongements hyperboliques afin de calculer un score d'anomalie (104) pour l'opération de la machine (302) ; et
la restitution du score d'anomalie pour l'opération de la machine (302).
